# EUROPEAN PATENT APPLICATION

(11) **EP 4 832 652 A1**
(43) Date of publication of application: **28.10.2026**
(21) Application number: 23961811.9
(22) Date of filing: 19.12.2023
(51) Int. Cl.: H04W 76/28

(54) **INSTRUCTION METHOD AND APPARATUS FOR DISCONTINUOUS COMMUNICATION CONFIGURATION, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Penza, Giancarlo
(86) International application number: PCT/CN2023/140004
(87) International publication number: WO 2025/129466

(57) **Abstract**

The present application belongs to the field of communications. Disclosed are an instruction method and apparatus for a discontinuous communication configuration, and a device and a medium. The method, which is executed by a terminal device, comprises: receiving first indication information and/or second indication information, wherein the first indication information is used for making an instruction to activate or deactivate a first discontinuous communication configuration on a first cell, and the second indication information is used for making an instruction to activate or deactivate a second discontinuous communication configuration on the first cell.

## Description

### TECHNICAL FIELD

The present disclosure relates to the field of communication, and in particular to a method and an apparatus for indicating discontinuous communication configuration, a device, and a medium.

### BACKGROUND

In a case that one cell supports multiple sets of discontinuous communication configurations, there is no feasible scheme to realize the coexistence and use of multiple sets of discontinuous communication configurations reasonably.

### SUMMARY

The present disclosure provides a method and an application for indicating discontinuous communication configuration, a device and a medium. The technical solutions at least include the following contents.

According to an aspect of the embodiments of the present disclosure, a method for indicating discontinuous communication configuration is provided. The method is performed by a terminal device, and the method includes the following operation.

The first indication information and/or the second indication information is received. The first indication information is used for indicating activating or deactivating the first discontinuous communication configuration on the first cell, and the second indication information is used for indicating activating or deactivating the second discontinuous communication configuration on the first cell.

According to another aspect of the embodiments of the present disclosure, a method for indicating discontinuous communication configuration is provided. The method is performed by a network device, and the method includes the following operation.

The first indication information and/or second indication information is sent. The first indication information is used for indicating activating or deactivating the first discontinuous communication configuration on the first cell, and the second indication information is used for indicating activating or deactivating the second discontinuous communication configuration on the first cell.

According to another aspect of the embodiments of the present disclosure, an apparatus for indicating discontinuous communication configuration is provided. The apparatus includes a receiving module.

The receiving module is configured to receive first indication information and/or second indication information, the first indication information is used for indicating activating or deactivating the first discontinuous communication configuration on the first cell, and the second indication information is used for indicating activating or deactivating the second discontinuous communication configuration on the first cell.

According to another aspect of the embodiments of the present disclosure, an apparatus for indicating discontinuous communication configuration is provided. The apparatus includes a sending module.

The sending module is configured to send the first indication information and/or the second indication information. The first indication information is used for indicating activating or deactivating the first discontinuous communication configuration on the first cell, and the second indication information is used for indicating activating or deactivating the second discontinuous communication configuration on the first cell.

According to an aspect of the embodiments of the present disclosure, a communication device is provided. The communication device includes a processor, a receiver and/or transmitter connected to the processor, and a memory for storing instructions executable for the processor. The terminal device is configured to implement a method for indicating the discontinuous communication configuration as described above.

According to an aspect of the present disclosure, a computer-readable storage medium is provided. Executable instructions are stored in the computer-readable storage medium. The executable instructions are loaded and executed by the processor to implement the method for indicating discontinuous communication configuration as described in the above aspects.

According to an aspect of the present disclosure, a computer program product is provided. The computer program product includes computer instructions stored in a computer-readable storage medium. A processor of a computer device reads the computer instructions from the computer-readable storage medium, and the processor executes the computer instructions to cause the computer device to perform the method for indicating the discontinuous communication configuration as described in the above aspects.

According to an aspect of the present disclosure, a chip is provided. The chip includes programmable logic circuitry and/or program instructions. When the chip is running, a method for indicating discontinuous communication configuration as described in the above aspects is implemented.

According to an aspect of the present disclosure, a computer program is provided. The computer program includes computer instructions. A processor of a computer device executes the computer instructions to cause the computer device to perform the method for indicating discontinuous communication configuration as described in the above aspects.

The technical solutions provided by the embodiments of the present disclosure may include the following beneficial effects.

Activating or deactivating discontinuous communication configuration(s) on the first cell is supported through the first indication information and the second indication information, so as to provide a feasible solution for the coexistence and use of different discontinuous communication configurations.

### BRIEF DESCRIPTION OF THE DRAWINGS

In order to more clearly explain the technical solutions in the embodiments of the present disclosure, the following will briefly introduce the accompanying drawings that need to be used in the description of the embodiments. Obviously, the accompanying drawings in the following description are only some embodiments of the present disclosure, and for those with ordinary skill in the art, other drawings may be obtained based on these drawings without exerting creative efforts.
FIG. 1 illustrates a schematic diagram of a communication system provided by an exemplary embodiment of the present disclosure.
FIG. 2 illustrates a schematic diagram of a communication system provided by an exemplary embodiment of the present disclosure.
FIG. 3 illustrates a schematic flowchart of a method for indicating discontinuous communication configuration provided by an exemplary embodiment of the present disclosure.
FIG. 4 illustrates a schematic flowchart of a method for indicating discontinuous communication configuration provided by an exemplary embodiment of the present disclosure.
FIG. 5 illustrates a schematic diagram of a DCI format provided by an exemplary embodiment of the present disclosure.
FIG. 6 illustrates a schematic diagram of a DCI format provided by an exemplary embodiment of the present disclosure.
FIG. 7 illustrates a schematic diagram of a DCI format provided by an exemplary embodiment of the present disclosure.
FIG. 8 illustrates a schematic diagram of a DCI format provided by an exemplary embodiment of the present disclosure.
FIG. 9 illustrates a schematic diagram of a DCI format provided by an exemplary embodiment of the present disclosure.
FIG. 10 illustrates a schematic diagram of a DCI format provided by an exemplary embodiment of the present disclosure.
FIG. 11 illustrates a schematic diagram of a DCI format provided by an exemplary embodiment of the present disclosure.
FIG. 12 illustrates a schematic diagram of a DCI format provided by an exemplary embodiment of the present disclosure.
FIG. 13 illustrates a schematic diagram of a DCI format provided by an exemplary embodiment of the present disclosure.
FIG. 14 illustrates a schematic diagram of a DCI format provided by an exemplary embodiment of the present disclosure.
FIG. 15 illustrates a schematic diagram of a DCI format provided by an exemplary embodiment of the present disclosure.
FIG. 16 illustrates a schematic flowchart of a method for indicating discontinuous communication configuration provided by an exemplary embodiment of the present disclosure.
FIG. 17 illustrates a schematic diagram of a method for indicating discontinuous communication configuration provided by an exemplary embodiment of the present disclosure.
FIG. 18 illustrates a schematic flowchart of a method for indicating discontinuous communication configuration provided by an exemplary embodiment of the present disclosure.
FIG. 19 illustrates a schematic flowchart of a method for indicating discontinuous communication configuration provided by an exemplary embodiment of the present disclosure.
FIG. 20 illustrates a block diagram of a structure of an apparatus for indicating discontinuous communication configuration provided by an exemplary embodiment of the present disclosure.
FIG. 21 illustrates a block diagram of a structure of an apparatus for indicating discontinuous communication configuration provided by an exemplary embodiment of the present disclosure.
FIG. 22 is a schematic diagram of a structure of a communication device provided by an exemplary embodiment of the present disclosure.

### DETAILED DESCRIPTION

In order to make the object, technical solutions, and advantages of the present disclosure more clear, embodiments of the present disclosure will be described in further detail below with reference to the accompanying drawings. Exemplary embodiments will be described in detail herein, examples of which are shown in the accompanying drawings. When the following description refers to the drawings, unless otherwise indicated, the same numerals in different drawings denote the same or similar elements. The embodiments described in the following exemplary examples do not represent all embodiments consistent with the present disclosure. Rather, they are merely examples of apparatus and methods consistent with some aspects of the present disclosure as detailed in the appended claims.

The terminology used herein is for the purpose of describing particular embodiments only and is not intended to limit the present disclosure. As used in the present disclosure and the appended claims, the singular forms of "an", "the" and "said" are also intended to include the plurality forms unless the context clearly indicates otherwise. It should also be understood that the term "and/or" as used herein refers to and encompasses any or all possible combinations of one or more associated listed items.

It should be understood that although the terms first, second, third, and the like may be used in the present disclosure to describe various information, such information should not be limited to such terms. These terms are used only to distinguish information of the same type from each other. For example, the first information may also be referred to as the second information without departing from the scope of the present disclosure, and similarly, the second information may also be referred to as the first information. Depending on the context, the word "if" as used herein may be interpreted as "when" or "in response to determining".

First, a communication technology according to the embodiments of the present disclosure is introduced.

### Network Energy Saving (NES)

The NES is significant for environmental sustainability, reducing environmental impacts (such as reducing greenhouse gas emissions), and saving Operational Expenditure (OPEX). With the increasing popularity of 5th Generation (5G) mobile communication systems across various industrial sectors and geographic regions and the need to support very high data transfer rates to handle more advanced services and applications, network deployments have become more intensive, the use of more antennas, greater bandwidth, and more bands is required. Considering the environmental impact of 5G, controlled new schemes need to be developed to enhance the NES.

Energy consumption has become a key component of operating costs of the operator. Some analyses suggest that energy costs for mobile networks account for about 23% of total operating costs. Most of the energy consumption comes from wireless access networks, and more specifically, from Active Antenna units (AAU), where data centers and fiber optic transmission account for a smaller share. The power consumption of a wireless access may be divided into two parts: the dynamic part includes only the power consumption when data is being transmitted or received, and the static part includes power consumption for maintaining the necessary operation of the wireless access device in all time cases, which includes power consumption when data is not transmitted or received.

Therefore, it is necessary to research and develop network energy consumption models, Key Performance indicators (KPIs), evaluation methods, etc. on the network device side to determine and study NES technologies in target deployment scenarios. Here, a power consumption model on the terminal device side that has been defined may be used as a reference. The NES research mainly considers how to achieve more efficient dynamic operation and/or semi-static operation, and considers one or more NES technologies applied to time domain, frequency domain, spatial domain and power domain, combines potential terminal device feedback support, potential terminal device auxiliary information, and technologies such as information exchange or coordination between network interfaces to achieve more fine-grained data transmission and/or reception adaptation.

It is worth noting that the NES studies not only evaluate potential NES gains, but also need to evaluate and balance the impact on network and user performance by observing KPIs. The KPI includes, for example, one or more of KPIs related to spectrum efficiency, capability, User Perceived Throughput (UPT), latency, UE Power Consumption, complexity, handover performance, Call Drop Rate, initial access performance, Service Level Agreement (SLA) security, and the like. The research of NES should avoid having a large impact on the above KPIs.

### Cell Discontinuous Transmission (Cell DTX), Cell Discontinuous Reception (Cell DRX):

To achieve the NES, the network device may configure cell DTX and/or cell DRX for the terminal device. The cell DTX and/or cell DRX are primarily configured for terminal devices in a Radio Resource Control (RRC) connected state. The network device may configure the cell DTX and the cell DRX separately, or may configure the cell DTX and the cell DRX simultaneously. For the conventional cell DTX and/or cell DRX, during the non-active time of the cell DTX and/or cell DRX, processing for dedicated channel or signal of the terminal device is not performed. The configuration of cell DTX and/or cell DRX may be validated by RRC signaling configuration, or may be activated or deactivated by Downlink Control Information (DCI).

The DRX period consists of an active Time and a Non-active Time. The active time is after starting of the DRX, or before no starting of the non-active timer, or when the active timer is not expired.

The DRX period also consists of an active Time and a Non-active Time. The active time is after starting of the DRX, or before no starting of the non-active timer, or when the active timer is not expired.

In the embodiments of the present disclosure, the active time is referred to as an active period or an On Duration, and the non-active time is referred to as a Non-active period or an Off Duration/Opportunity.

It will be appreciated that cell DTX is discontinuous transmission of a cell-level communication channel or signal, and cell DRX is discontinuous reception of a cell-level communication channel or signal.

In order to further realize the NES, a network layout method is to reduce the transmission of common channels or signals in the network. For example, the cell DTX and/or the cell DRX configured by the network device are enhanced, and processing for the common channel or signal is not performed during the non-active time of the cell DTX and/or the cell DRX. However, if a new terminal device behavior or network device behavior is introduced to the non-active time of the cell DTX and/or cell DRX in the process of enhancement of the cell DTX and/or cell DRX, it is necessary to consider how the enhanced cell DTX and/or cell DRX and the conventional cell DTX and/or cell DRX coexist.

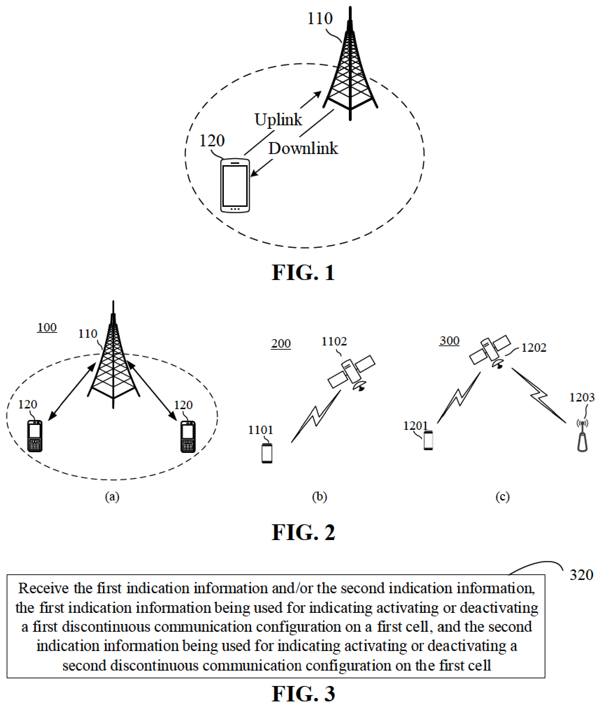

FIG. 1 illustrates a schematic diagram of a wireless communication system provided by an exemplary embodiment of the present disclosure. The wireless communication system includes a network device 110 and a terminal device 120, and the present disclosure is not limited thereto.

The Network device 110 in the present disclosure provides a wireless communication function, and the Network device 110 includes, but is not limited to, an Evolved Node B (eNB), a Radio Network Controller (RNC), a Node B (NB), a Base Station Controller (BSC), a Base Transceiver Station (BTS), a Home Base Station (e.g., a Home Evolved Node B, or a Home Node B, HNB), a Baseband Unit (BBU), an Access Point (AP) in a Wireless Fidelity (Wi-Fi) system, a wireless relay node, a wireless backhaul node, a transmission point (TP) or a Transmission and Reception Point (TRP), or the like, may be a Next Generation Node B (gNB) or a Transmission Point (TRP or TP) in a Fifth Generation (5G) mobile communication system, or one or a group of antenna panels (including multiple antenna panels) of a base station in a 5G system, or a network node constituting a gNB or a Transmission Point, such as a Baseband Unit (BBU) or a Distributed Unit (DU), or the like, or a base station in a Beyond Fifth Generation (B5G) mobile communication system or a sixth Generation (6G) mobile communication system, or a Core Network (CN), Fronthaul (Fronthaul), Backhaul, Radio Access Network (RAN), Network slice, or a reader/writer of Radio Frequency Identification (RFID) system.

The terminal device 120 in the present disclosure is also referred to as a User Equipment (UE), an access terminal, a User unit, a User station, a mobile station, a mobile station, a remote station, a remote terminal, a mobile device, a User terminal, a terminal, a wireless communication device, a User agent, and a User device. The terminal includes, but is not limited to, a handheld device, a wearable device, an in-vehicle device, an Internet of Things device, and the like, for example, an electronic tag, a controller, a Mobile phone, a tablet, an e-book reader, a laptop computer, a desktop computer, a television, a game console, a Mobile Internet Device (MID), an Augmented Reality (AR) terminal, a Virtual Reality (VR) terminal, and a Mixed Reality (MR) terminal, a wearable device, a handle, a wireless terminal in industrial control, a wireless terminal in Self Driving, a wireless terminal in remote medical, a wireless terminal in a Smart Grid, a wireless terminal in Transportation Safety, a wireless terminal in a Smart City, a wireless terminal in a Smart Home, a wireless terminal in Remote Medical Surgery, a cellular phone, a cordless phone, a Session Initiation Protocol (SIP) phone, Wireless Local Loop (WLL) station, Personal Digital Assistant (PDA), Set Top Box (STB), Customer Premise Equipment (CPE), or the like.

The network device 110 and the terminal device 120 communicate with each other through some air interface technology, such as a Uu interface.

For example, there are two communication scenarios between the network device 110 and the terminal device 120: an uplink communication scenario and a downlink communication scenario. The uplink communication refers to transmit a signal to the network device 110, and the downlink communication refers to transmit a signal to the terminal device 120.

The technical solutions provided by the embodiments of the present disclosure may be applied to various communication systems, such as Global System of Mobile communication (GSM) System, Code Division Multiple Access (CDMA) System, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced Long Term Evolution (LTE-A) system, Universal Mobile Telecommunication system (UMTS), Worldwide Interoperability for Microwave Access (WiMAX) communication system, 5G Mobile communication system, New Radio (NR) system, Evolution of NR System, LTE-based access to unlicensed spectrum (LTE-U) system, NR-based access to unlicensed spectrum (NR-U) system, Terrestrial Networks (TN) system, Non-Terrestrial Networks (NTN) system, Wireless Local Area Networks (WLAN), Wireless Fidelity (Wi-Fi), cellular IoT system, cellular passive IoT system, and may also be applied to subsequent evolution systems of 5G NR system, and may also be applied to B5G, 6G and subsequent evolution systems. In some embodiments of the present disclosure, "NR" may also be referred to as a 5G NR system or a 5G system. Here, the 5G mobile communication system may include a Non-Standalone (NSA) network and/or a Standalone (SA) network.

The technical solutions provided by the embodiments of the present disclosure may also be applied to Machine Type Communication (MTC), Long Term Evolution-Machine (LTE-M), device-to-device (D2D) networks, Machine to Machine (M2M) networks, Internet of Things (IoT) networks or other networks. The IoT network may include, for example, an Internet of Vehicles. Here, the communication methods in the Internet of Vehicles system are collectively referred to as Vehicle to X (V2X, X may represent anything), and for example, the V2X may include Vehicle to Vehicle (V2V) communication, Vehicle to Infrastructure (V2I) communication, Vehicle to Pedestrian (V2P) communication, Vehicle to Network (V2N) communication, and the like.

The above-mentioned NTN system generally provides communication services to terrestrial users by means of satellite communication. Common NTN systems include NR-NTN systems and IoT-NTN systems, and other NTN systems may be included later.

FIG. 2 (a) illustrates a schematic diagram of a communication system 100 provided by the embodiments of the present disclosure. The communication system includes a network device 110 and a terminal device 120. The network device 110 may provide communication coverage for a specific area and may communicate with terminal devices located within the coverage area. The communication system 100 illustrated in FIG. 2 (a) includes one network device and two terminal devices, and in some embodiments, the communication system 100 may further include multiple network devices, and the coverage range of each network device may include one or more terminal devices, which is not limited in the present disclosure. FIG. 2 (b) illustrates a schematic diagram of a communication system 200 provided by an embodiment of the present disclosure. The communication system 200 includes a terminal device 1101 and a satellite 1102, and wireless communication may be performed between the terminal device 1101 and the satellite 1102. The network formed between the terminal device 1101 and the satellite 1102 may also be referred to as an NTN. In the communication system 200, the satellite 1102 may be referred to as a network device, the satellite 1102 may also have the function of a base station, and the terminal device 1101 and the satellite 1102 may communicate directly. In some embodiments, the communication system 200 may include multiple network devices (i.e., satellites 1102), and the coverage range of each network device may include one or more terminal devices, which is not limited in the present disclosure. FIG. 2 (c) illustrates a schematic diagram of a communication system 300 provided by an embodiment of the present disclosure. The communication system 300 includes a terminal device 1201, a satellite 1202, and a base station 1203, and wireless communication may be performed between the terminal device 1201 and the satellite 1202, and communication may be performed between the satellite 1202 and the base station 1203. The network formed among the terminal device 1201, the satellite 1202, and the base station 1203 may also be referred to as an NTN. In the communication system 300, the base station 1203 is referred to as a network device, the satellite 1202 may not have the function of a base station, and communication between the terminal device 1201 and the base station 1203 needs to be transferred by the satellite 1202. In some embodiments, the communication system may include multiple network devices (i.e., the base stations 1203), and the coverage range of each network device may include one or more terminal devices, which is not limited in the present disclosure.

Future evolving communication systems such as B5G or 6G may also include a Distributed Multiple-Input Multiple-Output (Distributed MIMO) scenario and/or a Massive MIMO scenario. In some cases, distributed MIMO and/or massive MIMO may support a Cell-Free network layout scenario or a UE-Centric network layout scenario. The distributed MIMO may also be called a distributed antenna system, and massive MIMO may also be called a massive antenna matrix system. It should be understood that scenarios such as distributed MIMO, massive MIMO, and the like are also applicable to TN communication systems and/or NTN communication systems.

FIG. 3 illustrates a schematic flowchart of a method for indicating discontinuous communication configuration provided by an exemplary embodiment of the present disclosure. The method is performed by a terminal device, and the method includes the following operation.

In operation 320, the first indication information and/or second indication information is received, the first indication information being used for indicating activating or deactivating the first discontinuous communication configuration on the first cell, and the second indication information being used for indicating activating or deactivating the second discontinuous communication configuration on the first cell.

The first discontinuous communication configuration is different from the second discontinuous communication configuration.

In some embodiments, the first cell is configured with the first discontinuous communication configuration and/or the second discontinuous communication configuration.

In the embodiments of the present disclosure, the first cell is a serving cell of the terminal device. Alternatively, the first cell includes a serving cell of the terminal device. Alternatively, the first cell includes multiple serving cells of the terminal device. Alternatively, the first cell includes multiple serving cells in one serving cell group of the terminal device.

Exemplarily, the first cell is a primary cell of the terminal device. Exemplarily, the first cell is a secondary cell of the terminal device. Exemplarily, the first cell is a primary secondary cell of the terminal device. Exemplarily, the first cell is a primary cell and a secondary cell of the terminal device. Exemplarily, the first cell is a primary cell and a primary secondary cell of the terminal device. Exemplarily, the first cell is all of the cells in the first cell group of the terminal device, and the like.

In some embodiments, the first indication information is different from the second indication information. Alternatively, the first indication information and the second indication information are different in at least one of the following aspects: corresponding bits, carried information, corresponding Physical Downlink Control Channels (PDCCHs), corresponding DCI formats, numbers of bits, occupied time domain resources, or occupied frequency domain resources.

In some embodiments, the first discontinuous communication configuration includes the first cell DTX configuration, and/or the first cell DRX configuration.

In some embodiments, the second discontinuous communication configuration includes the second cell DTX configuration, and/or the second cell DRX configuration.

In some embodiments, the first discontinuous communication configuration may also be referred to as the first cell DTRX configuration, and the second discontinuous communication configuration may also be referred to as the second cell DTRX configuration. Here, the DTRX may be understood as DTX and/or DRX.

In summary, the method provided by the embodiments of the present disclosure supports activating or deactivating the discontinuous communication configurations on the first cell through the first indication information and the second indication information, so as to provide a feasible solution for the coexistence and use of different discontinuous communication configurations.

It should be understood that the method provided by the embodiments of the present disclosure is also applicable to scenarios of other discontinuous communication configurations, and the present disclosure is not limited thereto. For example, in a case that the first discontinuous communication configuration and/or the second discontinuous communication configuration are other discontinuous communication configurations, the method provided in the embodiments of the present disclosure may still be applicable. Exemplarily, other discontinuous communication configurations include, but are not limited to, at least one of following: a Connected mode DRX (C-DRX) configuration, a DRX for Multicast/Broadcast Services (MBS) Broadcast, or a DRX for MBS Multicast.

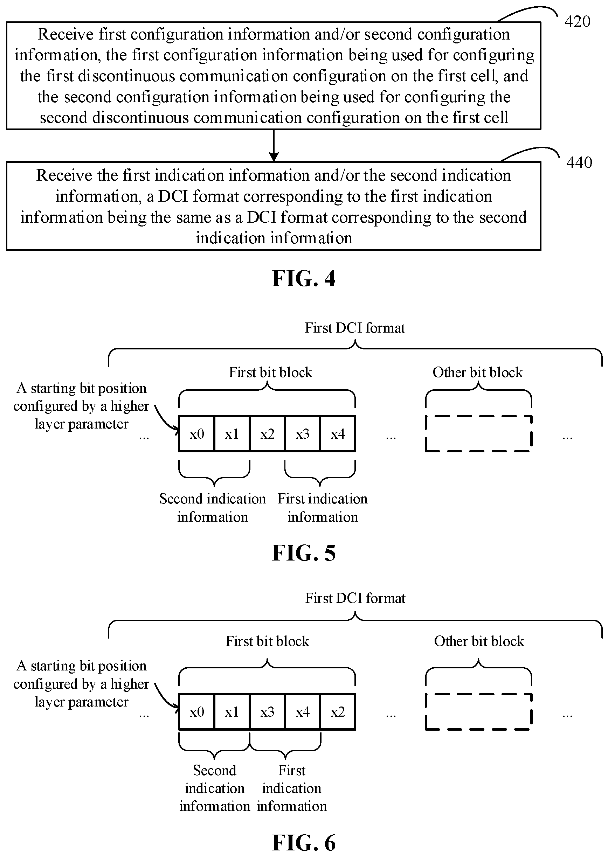

In some embodiments, same DCI format is used for activating or deactivating the first discontinuous communication configuration and the second discontinuous communication configuration. Since it is not necessary to design the DCI format separately for the first indication information and the second indication information, such a design is advantageous in reducing the signaling overhead and improving the indication efficiency. For details, the reference is made to the embodiment illustrated in FIG. 4.

FIG. 4 illustrates a schematic flowchart of a method for indicating discontinuous communication configuration provided by an exemplary embodiment of the present disclosure. The method is performed by a terminal device, and the method includes at least some of the following operations.

In operation 420, the first configuration information and/or second configuration information is received, the first configuration information is used for configuring the first discontinuous communication configuration on the first cell, and the second configuration information is used for configuring the second discontinuous communication configuration on the first cell.

In some embodiments, the first cell is configured with the first discontinuous communication configuration and/or the second discontinuous communication configuration.

For the relevant content of the first cell, the reference is made to the operation 320, which will not be described again here.

In some embodiments, the first configuration information and the second configuration information are carried in the same RRC signaling, or the first configuration information and the second configuration information are carried in different RRC signaling.

In some embodiments, the first configuration information is carried in a system message, and the second configuration information is carried in a RRC signaling dedicated to the terminal device.

In some embodiments, the first discontinuous communication configuration includes the first cell DTX configuration, and/or the first cell DRX configuration.

In some embodiments, the second discontinuous communication configuration includes the second cell DTX configuration, and/or the second cell DRX configuration.

In some embodiments, the first discontinuous communication configuration may also be referred to as the first DTRX configuration, and the second discontinuous communication configuration may also be referred to as the second DTRX configuration. Here, the DTRX may be understood as DTX and/or DRX.

In some embodiments, during a non-active time of the first cell DTX configuration, the terminal device does not expect to receive at least one of following: the first downlink channel or signal, or the second downlink channel or signal.

In some embodiments, in a case that the first cell is configured with the first cell DTX configuration and the first cell DTX configuration is activated, during a non-active time of the first cell DTX configuration, the terminal device does not expect to receive at least one of following: the first downlink channel or signal, or the second downlink channel or signal.

In some embodiments, during the non-active time of the first cell DTX configuration, the network device does not send at least one of following: the first downlink channel or signal, or the second downlink channel or signal.

In some embodiments, in a case that the first cell is configured with the first cell DTX configuration and the first cell DTX configuration is activated, during the non-active time of the first cell DTX configuration, the network device does not send at least one of following: the first downlink channel or signal, or the second downlink channel or signal.

In some embodiments, during the non-active time of the second cell DTX configuration, the terminal device does not expect to receive the second downlink channel or signal.

In some embodiments, in a case that the first cell is configured with the second cell DTX configuration and the second cell DTX configuration is activated, during the non-active time of the second cell DTX configuration, the terminal device does not expect to receive the second downlink channel or signal.

In some embodiments, during the non-active time of the second cell DTX configuration, the network device does not send the second downlink channel or signal.

In some embodiments, in a case that the first cell is configured with the second cell DTX configuration and the second cell DTX configuration is activated, during the non-active time of the second cell DTX configuration, the network device does not send the second downlink channel or signal.

In some embodiments, the first downlink channel or signal includes at least one of following: a Synchronization Signal and PBCH Block (SSB), a system message, or a Paging message.

In some embodiments, the second downlink channel or signal includes at least one of following: a Physical Downlink Control Channel (PDCCH) scrambled by a Radio Network Temporary Identifier (RNTI) dedicated to the terminal device, a Semi-Persistent Scheduling-Physical DownLink Shared Channel (SPS-PDSCH), a PDCCH associated with DCI format 2_0, a PDCCH associated with DCI format 2_1, a PDCCH associated with DCI format 2_2, a PDCCH associated with DCI format 2_3, a PDCCH associated with DCI format 2_4, a PDCCH associated with DCI format 2_5, the first Channel State Information-Reference Signal (CSI-RS) that is transmitted periodically, or the first CSI-RS that is transmitted semi-persistently**.** The first CSI-RS is associated with CSI reporting.

In some embodiments, during the non-active time of the first cell DRX configuration, the terminal device does not expect to send at least one of following: the first uplink channel or signal, or the second uplink channel or signal.

In some embodiments, in a case that the first cell is configured with the first cell DRX configuration and the first cell DRX configuration is activated, during the non-active time of the first cell DRX configuration, the terminal device does not expect to send at least one of following: the first uplink channel or signal, or the second uplink channel or signal.

In some embodiments, during the non-active time of the first cell DRX configuration, the network device does not receive at least one of following: the first uplink channel or signal, or the second uplink channel or signal.

In some embodiments, in a case that the first cell is configured with the first cell DRX configuration and the first cell DRX configuration is activated, during the non-active time of the first cell DRX configuration, the network device does not receive at least one of following: the first uplink channel or signal, or the second uplink channel or signal.

In some embodiments, during the non-active time of the second cell DRX configuration, the terminal device does not expect to send the second uplink channel or signal.

In some embodiments, in a case that the first cell is configured with the second cell DRX configuration and the second cell DRX configuration is activated, during the non-active time of the second cell DRX configuration, the terminal device does not expect to send the second uplink channel or signal.

In some embodiments, during the non-active time of the second cell DRX configuration, the network device does not receive the second uplink channel or signal.

In some embodiments, in a case that the first cell is configured with the second cell DRX configuration and the second cell DRX configuration is activated, during the non-active time of the second cell DRX configuration, the network device does not receive the second uplink channel or signal.

In some embodiments, the first uplink channel or signal includes at least one of following: a Physical Random Access Channel (PRACH), a Msg 3 Physical Uplink Shared Channel (Msg 3 PUSCH), or a Msg A. The Msg 3 PUSCH refers to a PUSCH scheduled by Random Access Response (RAR) in the process of contention random access.

In some embodiments, the second uplink channel or signal includes at least one of following: a Configured Grant-PUSCH (CG-PUSCH), a Scheduling Request (SR), CSI that is reported periodically, CSI that is reported semi-persistently, an uplink Sounding Reference Signal (SRS) that is transmitted periodically, or a SRS that is transmitted semi-persistently.

In the embodiments of the present disclosure, the behavior of "not expecting" is the expectation and demand of the UE side, and the network device side will not perform the behavior that is not expected by the UE side as much as possible, but the possibility that the network device side does not satisfy the behavior of "not expecting" of the UE side is not excluded.

In the embodiments of the present disclosure, the behavior of "expecting" is also the expectation and demand of the UE side, and the network device side will perform the behavior that is expected by the UE side as much as possible, but the possibility that the network device side does not satisfy the behavior of "expecting" of the UE side is not excluded.

In some embodiments, "the terminal device does not expect to send" may be replaced with "terminal device does not send".

In some embodiments, "the network device does not receive" may be replaced with "the network device does not expect to receive".

In some embodiments, in a case that the first cell is configured with the first discontinuous communication configuration and the second discontinuous communication configuration, the terminal device ignores the second discontinuous communication configuration, or the terminal device performs only the first discontinuous communication configuration. For example, if the first cell is configured with the first cell DTX configuration and the second cell DTX configuration, the terminal device ignores the second cell DTX configuration. For example, if the first cell is configured with the first cell DRX configuration and the second cell DRX configuration, the terminal device ignores the second cell DRX configuration.

Here, ignoring the second discontinuous communication configuration may be understood that the second discontinuous communication configuration is discarded after receiving the second discontinuous communication configuration. It may also be understood that the configuration is not performed after receiving the second discontinuous communication configuration, or it may be understood that the configuration is not activated after receiving the second discontinuous communication configuration.

In some embodiments, the first configuration information is further used to configure at least one of following: whether the first DCI format carries the first indication information, whether the second DCI format carries the first indication information, or whether the first DCI format carries the second indication information.

In some embodiments, the first configuration information indicates whether the first DCI format carries the first indication information by means of an explicit indication. Alternatively, the first configuration information indicates whether the first DCI format carries the first indication information by means of an implicit indication.

In operation 440, the first indication information and/or the second indication information is received, and the DCI format corresponding to the first indication information is the same as the DCI format corresponding to the second indication information.

In some embodiments, the first indication information includes 1 bit. In a case that the first discontinuous communication configuration includes the first cell DTX configuration, the 1 bit is used for indicating activating or deactivating the first cell DTX configuration.

In some embodiments, the first indication information includes 1 bit. In a case that the first discontinuous communication configuration includes the first cell DRX configuration, the 1 bit is used for indicating activating or deactivating the first cell DRX configuration.

In some embodiments, the first indication information includes 1 bit. In a case that the first discontinuous communication configuration includes the first cell DTX configuration and the first cell DRX configuration, the 1 bit is used for indicating activating or deactivating the first cell DTX configuration and the first cell DRX configuration. That is, the activation states of the first cell DTX configuration and the first cell DRX configuration are indicated by the same bit.

In some embodiments, the first indication information includes 2 bits. In a case that the first discontinuous communication configuration includes the first cell DTX configuration and the first cell DRX configuration, one bit of the 2 bits is used for indicating activating or deactivating the first cell DTX configuration, and the other bit of the 2 bits is used for indicating activating or deactivating the first cell DRX configuration.

In some embodiments, the second indication information includes 1 bit. In a case that the second discontinuous communication configuration includes the second cell DTX configuration, the 1 bit is used for indicating activating or deactivating the second cell DTX configuration.

In some embodiments, the second indication information includes 1 bit. In a case that the second discontinuous communication configuration includes the second cell DRX configuration, the 1 bit is used for indicating activating or deactivating the second cell DRX configuration.

In some embodiments, the second indication information includes 1 bit. In a case that the second discontinuous communication configuration includes the second cell DTX configuration and the second cell DRX configuration, the 1 bit is used for indicating activating or deactivating the second cell DTX configuration and the second cell DRX configuration. That is, the activation states of the second cell DTX configuration and the second cell DRX configuration are indicated by the same bit.

In some embodiments, the second indication information includes 2 bits. In a case that the second discontinuous communication configuration includes the second cell DTX configuration and the second cell DRX configuration, one bit of the 2 bits is used for indicating activating or deactivating the second cell DTX configuration, and the other bit of the 2 bits is used for indicating activating or deactivating the second cell DRX configuration.

In some embodiments, the first indication information is carried in the first DCI format, and/or the second indication information is carried in the first DCI format.

In some embodiments, in a case that the terminal device is in a RRC connected state, the first indication information is carried in the first DCI format.

In some embodiments, the first DCI format corresponds to the first RNTI and/or the first common search space set, and the first RNTI and/or the first common search space set is configured by a network device through a higher layer parameter or a higher layer signaling.

In the embodiments of the present disclosure, the high layer parameter or the high layer signaling includes at least one of the following: RRC signaling, a system message, or a Media Access Control Control Element (MAC CE).

In some embodiments, the first RNTI is a CellDTRX-RNTI associated with DCI format 2_9.

In some embodiments, the first DCI format includes DCI formats 2_9.

In some embodiments, the DCI format 2_9 includes a total of N bit blocks. Each bit block is associated with one cell. Alternatively each bit block is associated with a discontinuous communication configuration of one cell. A bit position of a starting bit of each bit block in the DCI format 2_9 is configured by the network device through a higher layer parameter or higher layer signaling. N is an integer greater than or equal to 1.

In some embodiments, the DCI format 2_9 may be further used to indicate whether the first cell enters NES mode. For example, if the first cell is configured with triggering an NES event by using DCI, the bit block corresponding to the first cell further includes 1 bit for indicating whether the first cell enters the NES mode. Alternatively, the first cell is a primary cell of the terminal device. Here, the first cell is configured with triggering the NES event by using DCI, which may also be understood that the first cell is configured with indicating whether to enter the NES mode by DCI, and which may also be understood that the first cell is configured with triggering whether to enter the NES mode by using DCI.

It is assumed that the first cell is configured with indicating activating or deactivating the second cell DTX configuration and/or the second cell DRX configuration on the first cell by using the DCI, there are five possible scenarios for the bit block corresponding to the first cell.
(1) The first cell is configured with the second cell DTX configuration and the second cell DRX configuration, and the bit block corresponding to the first cell includes 2 bits, which are used for indicating whether the second cell DTX configuration and the second cell DRX configuration are activated or deactivated, respectively.
(2) The first cell is configured with only the second cell DTX configuration, and the bit block corresponding to the first cell includes 1 bit, which is used for indicating activating or deactivating the second cell DTX configuration.
(3) The first cell is configured with only the second cell DRX configuration, and the bit block corresponding to the first cell includes 1 bit, which is used for indicating activating or deactivating the second cell DRX configuration.
(4) The first cell is not configured with the second cell DTX configuration and the second cell DRX configuration, then no bits in the bit block corresponding to the first cell are used to indicate activating or deactivating the second cell DTX and the second cell DRX. It may also be understood that in the bit block corresponding to the first cell, the number of bits for indicating activating or deactivating the second cell DTX and the second cell DRX is 0. It may also be understood that the bit block corresponding to the first cell is not included in the DCI format 2_9.
(5) The first cell is configured with the second cell DTX configuration and the second cell DRX configuration, and the bit block corresponding to the first cell includes 1 bit. The 1 bit is used for indicating whether the second cell DTX configuration and the second cell DRX configuration are activated or deactivated.

The bit block corresponding to the first cell refers to a bit block associated with the first cell among the N bit blocks included in the DCI format 2_9. For example, the network device configures the cell identifier of the first cell through a high layer parameter or high layer signaling, to cause the terminal device to determine the association relationship between the first cell and the bit block corresponding to the first cell.

In some embodiments, DCI in DCI format 2_9 may be further used to indicate whether the first cell enters the NES mode. For example, if the first cell is configured with triggering the NES event by using DCI, the bit block corresponding to the first cell further includes 1 bit, which is used for indicating whether the first cell enters the NES mode. Alternatively, the first cell is the primary cell of the terminal device.

Here, the first cell is configured with triggering the NES event by using DCI, which may be understood that the first cell is configured with indicating whether to enter the NES mode by DCI, and which may also be understood that the first cell is configured with triggering whether to enter the NES mode by using DCI.

It is assumed that the first cell is configured with indicating activating or deactivating the second cell DTX configuration and/or the second cell DRX configuration on the first cell by using the DCI, and is configured with triggering the NES event by using DCI, there are five possible scenarios for the bit block corresponding to the first cell:
(1) The first cell is configured with the second cell DTX configuration and the second cell DRX configuration, and the first cell is configured with triggering an NES event by using DCI, the bit block corresponding to the first cell includes 3 bits. 2 bits are used for indicating whether the second cell DTX configuration and the second cell DRX configuration are activated or deactivated, respectively, and the other 1 bit is used for indicating whether the first cell enters the NES mode.
(2) The first cell is configured with only the second cell DTX configuration, and the first cell is configured with triggering the NES event by using DCI, the bit block corresponding to the first cell includes 2 bits. 1 bit is used for indicating activating or deactivating the second cell DTX configuration, and the other 1 bit is used for indicating whether the first cell enters the NES mode.
(3) The first cell is configured with only the second cell DRX configuration, and the first cell is configured with triggering the NES event by using DCI, the bit block corresponding to the first cell includes 2 bits. 1 bit is used for indicating activating or deactivating the second cell DRX configuration, and the other 1 bit is used for indicating whether the first cell enters the NES mode.
(4) The first cell is not configured with the second cell DTX configuration and the second cell DRX configuration, and the first cell is configured with triggering the NES event by using DCI, the bit block corresponding to the first cell includes 1 bit, and the 1 bit is used for indicating whether the first cell enters the NES mode. In the bit block corresponding to the first cell, the number of bits for indicating activating or deactivating the second cell DTX and the second cell DRX is 0.
(5) The first cell is configured with the second cell DTX configuration and the second cell DRX configuration, and the first cell is configured with triggering the NES event by using DCI, the bit block corresponding to the first cell includes 2 bits. 1 bit is used for indicating whether the second cell DTX configuration and the second cell DRX configuration are activated or deactivated, and the other 1 bit is used for indicating whether the first cell enters the NES mode.

In some embodiments, the first cell is configured with the first discontinuous communication configuration, the first DCI format carries the first indication information; and/or the first cell is configured with the second discontinuous communication configuration, the first DCI format carries the second indication information. For example, the first cell is configured with the first discontinuous communication configuration, and in a case that the first DCI format is configured to carry the first indication information, the first DCI format carries the first indication information. For another example, the first cell is configured with the second discontinuous communication configuration, and in a case that the first DCI format is configured to carry the second indication information, the first DCI format carries the second indication information.

In some embodiments, the first cell is configured with the first discontinuous communication configuration, and in a case that the first configuration information configures the first DCI format to carry the first indication information, the first DCI format carries the first indication information; and/or, the first cell is configured with the second discontinuous communication configuration, and in a case that the first configuration information configures the first DCI format to carry the second indication information, the first DCI format carries the second indication information.

In some embodiments, the terminal device determines whether the first discontinuous communication configuration is activated or deactivated according to the first indication information. For example, in a case that the terminal device acquires the first indication information, and the first indication information indicates activating the first cell DTX configuration, the terminal device activates the first cell DTX configuration. For example, in a case that the terminal device acquires the first indication information, and the first indication information indicates activating the first cell DRX configuration, the terminal device activates the first cell DRX configuration. For example, in a case that the terminal device acquires the first indication information, and the first indication information indicates deactivating the first cell DTX configuration, the terminal device deactivates the first cell DTX configuration. For example, in a case that the terminal device acquires the first indication information, and the first indication information indicates deactivating the first cell DRX configuration, the terminal device deactivates the first cell DRX configuration.

In some embodiments, the terminal device determines whether the second discontinuous communication configuration is activated or deactivated according to the second indication information. For example, in a case that the terminal device acquires the second indication information, and the second indication information indicates activating the second cell DTX configuration, the terminal device activates the second cell DTX configuration. For example, in a case that the terminal device acquires the second indication information, and the second indication information indicates activating the second cell DRX configuration, the terminal device activates the second cell DRX configuration. For example, in a case that the terminal device acquires the second indication information, and the second indication information indicates deactivating the second cell DTX configuration, the terminal device deactivates the second cell DTX configuration. For example, in a case that the terminal device acquires the second indication information, and the second indication information indicates deactivating the second cell DRX configuration, the terminal device deactivates the second cell DRX configuration.

In some embodiments, the terminal device determines whether the first cell enters the NES mode according to the third indication information. The first cell may be a primary cell, or a primary secondary cell, or a secondary cell. For example, in a case that the third indication information indicates that the first cell enters the NES mode, and the first cell is the primary cell of the terminal device, the terminal device determines that the first cell enters the NES mode. For example, in a case that the third indication information indicates that the first cell ends the NES mode, and the first cell is the primary cell of the terminal device, the terminal device determines that the first cell ends the NES mode.

**Regarding using of the first DCI format to indicate activation or deactivation of the first discontinuous communication configuration and the second discontinuous communication configuration, the embodiments of the present disclosure provide the following two solutions:**
In the first solution, the first cell associates the first bit block, and the first bit block is used for indicating the activation or deactivation of the first discontinuous communication configuration and the second discontinuous communication configuration. In the solution, the same bit block is used for indicating the activation or deactivation of the first discontinuous communication configuration and the second discontinuous communication configuration. The RRC signaling overhead is small, the complexity is low, and the impact on the DCI format 2_9 is small.

In the second solution, the first cell associates the first bit block and/or the second bit block, the first bit block is used for indicating activation or deactivation of the first discontinuous communication configuration, and/or the second bit block is used for indicating activation or deactivation of the second discontinuous communication configuration. In this solution, independent bit blocks are used to indicate the activation or deactivation of the first discontinuous communication configuration and the second discontinuous communication configuration respectively, and there is a high flexibility.

In the first solution and the second solution, the first DCI format may include one or more of the first bit set, the second bit set, or the third bit set. The brief introductions of these three sets are as follows.

In some embodiments, the first bit set corresponds to the first indication information, the second bit set corresponds to the second indication information, and the third bit set corresponds to the third indication information. The third indication information is used for indicating whether the first cell enters the NES mode.

In some embodiments, the first DCI format includes the first bit set and the second bit set. An arrangement order of the first bit set and the second bit set from a most significant bit to a least significant bit is: the first bit set, the second bit set; or the arrangement order of the first bit set and the second bit set from a most significant bit to a least significant bit is: the second bit set, the first bit set.

If the arrangement order from a most significant bit to a least significant bit is: the first bit set, the second bit set, which means that the bit(s) in the first bit set is at the higher-order and the bit(s) in the second bit set is at the lower-order. That is, the bit(s) in the first bit set is the most significant bit(s), and the bit(s) in the second bit set is the least significant bit(s).

If the arrangement order from a least significant bit to a most significant bit is: the second bit set, the first bit set, which means that the bit(s) in the second bit set is at the higher-order and the bit(s) in the second bit set is at the lower-order. That is, the bit(s) in the second bit set is the most significant bit(s), and the bit(s) in the first bit set is the least significant bit(s).

In the embodiment of the present disclosure, bits located at the higher-order are also referred to as most significant bits (MSB), and bits located at the lower-order are also referred to as least significant bits (LSB).

In some embodiments, the first DCI format includes the first bit set and the third bit set. The arrangement order of the first bit set and the third bit set from a most significant bit to a least significant bit is: the first bit set, the third bit set, or the arrangement order from a most significant bit to a least significant bit is: the third bit set, the first bit set.

In some embodiments, the first DCI format includes the second bit set and the third bit set. The arrangement order of the second bit set and the third bit set from a most significant bit to a least significant bit is: the second bit set, the third bit set, or the arrangement order from a most significant bit to a least significant bit is: the third bit set, the second bit set.

In some embodiments, the first DCI format includes the first bit set, the second bit set, and the third bit set. The arrangement order of the three sets from a most significant bit to a least significant bit is: the first bit set, the second bit set, and the third bit set; or the arrangement order from a most significant bit to a least significant bit is: the second bit set, the first bit set, and the third bit set, or the arrangement order from a most significant bit to a least significant bit is: the second bit set, the third bit set, and the first bit set, or the arrangement order from a most significant bit to a least significant bit is: the first bit set, the third bit set, and the second bit set, or the arrangement order from a most significant bit to a least significant bit is: the third bit set, the first bit set, and the second bit set, or the arrangement order from a most significant bit to a least significant bit is: the third bit set, the second bit set, and the first bit set.

### First, the first solution is introduced: the first cell is associated with the first bit block

In some embodiments, the terminal device is in an RRC connected state. That is, the first DCI format is configured for the terminal device in the RRC connected state, and when the first cell is configured with the first discontinuous communication configuration, for the terminal device in the RRC connected state, the network device may configure the terminal device to determine the activation or deactivation of the first discontinuous communication configuration by monitoring the first DCI format.

In some embodiments, the first DCI format includes a total of N bit blocks, and the first bit block of the N bit blocks is associated with the first cell. The first bit block is associated with the first cell, which may also be understood that the first bit block is associated with a discontinuous communication configuration on the first cell.

In some embodiments, N bit blocks included in the first DCI format are associated with N cells, and N is a positive integer.

In some embodiments, the first bit block includes the first bit set and/or the second bit set.

In some embodiments, the first bit block includes the first bit set and the second bit set, that is, the N bit blocks include the first bit set and the second bit set. The order of the two set of bits is referred to above.

In some embodiments, the first bit block includes the third bit set, that is, N bit blocks include the third bit set. The third bit set corresponds to the third indication information, and the third indication information is used for indicating whether the first cell enters the NES mode.

In some embodiments, the first bit block includes the first bit set and the third bit set, that is, the N bit blocks include the first bit set and the third bit set. The order of the two set of bits is referred to above.

In some embodiments, the first bit block includes the first bit set, the second bit set, and the third bit set, that is, the N bit blocks include the first bit set, the second bit set, and the third bit set. The order of the three bit sets is referred to above.

In some embodiments, the first bit block includes the second bit set, that is, the N bit blocks include the second bit set. In a case that the first discontinuous communication configuration includes the first cell DTX configuration and the second discontinuous communication configuration includes the second cell DTX configuration, the first bit in the second bit set is adjusted to indicate activating or deactivating the first cell DTX configuration; and/or, in a case that the first discontinuous communication configuration includes the first cell DRX configuration and the second discontinuous communication configuration includes the second cell DRX configuration, the second bit in the second bit set is adjusted to indicate activating or deactivating the first cell DRX configuration.

The first bit is a bit for indicating activating or deactivating the second cell DTX configuration, and the second bit is a bit for indicating activating or deactivating the second cell DRX configuration.

The first bit in the second bit set is adjusted to indicate activating or deactivating the first cell DTX configuration, which may be understood that the first bit in the second bit set is replaced with a bit used for indicating activating or deactivating the first cell DTX configuration. The second bit in the second bit set is adjusted to indicate activating or deactivating the first cell DRX configuration, which may be understood that the second bit in the second bit set is replaced with a bit used for indicating activating or deactivating the first cell DRX configuration.

In some embodiments, the first bit block includes the second bit set, that is, the N bit blocks includes the second bit set. In a case that the first discontinuous communication configuration includes the first cell DTX configuration and the second discontinuous communication configuration includes the second cell DTX configuration, the second bit set includes a bit for indicating activating or deactivating the first cell DTX configuration and does not include a bit for indicating activating or deactivating the second cell DTX configuration; and/or, in a case that the first discontinuous communication configuration includes the first cell DRX configuration and the second discontinuous communication configuration includes the second cell DRX configuration, the second bit set includes a bit for indicating activating or deactivating the first cell DRX configuration and does not include a bit for indicating activating or deactivating the second cell DRX configuration.

In some embodiments, in a case that the first discontinuous communication configuration includes the first cell DTX configuration and the second discontinuous communication configuration includes the second cell DTX configuration, the first bit block includes the first bit set, the first bit set includes a bit for indicating activating or deactivating the first cell DTX configuration, and the second bit set does not include a bit for indicating activating or deactivating the second cell DTX configuration; and/or, in a case that the first discontinuous communication configuration includes the first cell DRX configuration and the second discontinuous communication configuration includes the second cell DRX configuration, the first bit block includes the first bit set, the first bit set includes a bit for indicating activating or deactivating the first cell DRX configuration, and the second bit set does not include a bit for indicating activating or deactivating the second cell DRX configuration.

In some embodiments, in a case that the first discontinuous communication configuration includes the first cell DTX configuration and the first cell DRX configuration, and the second discontinuous communication configuration includes the second cell DTX configuration and the second cell DRX configuration, the first bit block includes the first bit set, the first bit set includes: a bit for indicating activating or deactivating the first cell DTX configuration, and a bit for indicating activating or deactivating the first cell DRX configuration. The number of bits in the second bit set is 0.

In some embodiments, in a case that the first discontinuous communication configuration includes the first cell DTX configuration and the second discontinuous communication configuration includes the second cell DTX configuration, a bit in the second bit set used to indicate activating or deactivating the second cell DTX configuration is an invalid bit; and/or, in a case that the first discontinuous communication configuration includes the first cell DRX configuration and the second discontinuous communication configuration includes the second cell DRX configuration, a bit in the second bit set used to indicate activating or deactivating the second cell DRX configuration is an invalid bit.

Here, the bit in the second bit used to indicate activating or deactivating the second cell DTX configuration set is an invalid bit, which may be understood that the bit originally used to indicate activating or deactivating the second cell DTX configuration included in the second bit set is now not used to indicate activating or deactivating the second cell DTX configuration, or that the terminal device does not determine whether to activate the second cell DTX configuration according to the bit in the second bit set used to indicate activating or deactivating the second cell DTX configuration. The bit in the second bit set used to indicate activating or deactivating the second cell DRX configuration is an invalid bit, which may be understood that the bit originally used to indicate activating or deactivating the second cell DRX configuration included in the second bit set is now not used to indicate activating or deactivating the second cell DRX configuration, or that the terminal device does not determine whether to activate the second cell DRX configuration according to the bit in the second bit set used to indicate activating or deactivating the second cell DRX configuration.

In some embodiments, the first bit set includes the fourth bit and/or the fifth bit. For ease of explanation, the fourth bit may be represented by bit x3, and the fifth bit may be represented by bit x4. The first bit set is {x3}, or {x4}, or {x3, x4}, or {x4, x3}. The fourth bit is used for indicating activating or deactivating the first cell DTX configuration, and the fifth bit is used for indicating activating or deactivating the first cell DRX configuration.

In some embodiments, when the first bit set includes the fourth bit and the fifth bit, the fourth bit is a most significant bit and the fifth bit is a least significant bit. That is, the first bit set is {x3, x4}.

In some embodiments, when the first bit set includes the fourth bit and the fifth bit, the fourth bit is a least significant bit and the fifth bit is a most significant bit. That is, the first bit set is {x4, x3}.

In some embodiments, the third bit set includes the third bit, and the third bit may be represented by using bit x2. That is, the third bit set is {x2}. The third bit is used for indicating whether the first cell enters the NES mode.

In some embodiments, the second bit set includes the first bit and/or the second bit. For ease of explanation, a bit x0 may be used to represent the first bit and a bit x1 may be used to represent the second bit. The second bit set is {x0}, or {x1}, or {x0, x1}, or {x1, x0}. The first bit is used for indicating activating or deactivating the second cell DTX configuration and the second bit is used for indicating activating or deactivating the second cell DRX configuration.

In some embodiments, when the second bit set includes the first bit and the second bit, the first bit is a most significant bit and the second bit is a least significant bit. That is, the second bit set is {x0, x1}.

In some embodiments, when the second bit set includes the first bit and the second bit, the first bit is a least significant bit and the second bit is a most significant bit. That is, the second bit set is {x1, x0}.

It will be understood that the value of each of the above-mentioned bits may be 0 or 1, respectively. Of course, the value of each bit may be another value other than 0 or 1, and the value of each bit is not limited in the present disclosure.

As an example, when the third bit takes a value of 1 (that is, x2 takes a value of 1), it indicates that the first cell enters the NES mode. Alternatively, when the third bit takes a value of 0 (that is, x2 takes a value of 0), it indicates that the first cell enters the NES mode.

As an example, when the first bit takes a value of 1 (that is, x0 takes a value of 1), it indicates activating the second cell DTX configuration, and when the first bit takes a value of 0 (that is, x0 takes a value of 0), it indicates deactivating the second cell DTX configuration. Alternatively, when the first bit takes a value of 0 (that is, x0 takes a value of 0), it indicates activating the second cell DTX configuration, and when the first bit takes a value of 1 (that is, x0 takes a value of 1), it indicates deactivating the second cell DTX configuration.

The values of the second bit, the fourth bit, and the fifth bit may be taken with reference to the values of the first bit, which will not be described in detail here.

In some embodiments, the respective bits in the first bit block are contiguously arranged. For example, the first bit block includes bits of {x0, x1, x2, x3, x4}.

In some embodiments, the bits in the first bit block are arranged in an order from a most significant bit to a least significant bit: the first bit, the second bit, the third bit, the fourth bit, the fifth bit; or, the first bit, the second bit, the fourth bit, the fifth bit, the third bit; or, the second bit, the first bit, the third bit, the fifth bit, the fourth bit; or, the second bit, the first bit, the fifth bit, the fourth bit, the third bit; or the like. Although all arrangements are not listed here, it will be understood that the arrangement order of the respective bits in the first bit block may be adjusted according to the communication protocol or the actual transmission situation.

In some embodiments, a starting position of the first bit block is configured by the network device through a higher layer parameter or higher layer signaling. It may also be understood that a bit position of the starting bit of the first bit block in the first DCI format is configured by the network device through a higher layer parameter or higher layer signaling. For example, if the starting bit of the first bit block is the first bit, the position of the first bit in the first DCI format is configured by the network device through the higher layer parameter. For example, if the starting bit of the first bit block is the second bit, the position of the second bit in the first DCI format is configured by the network device through the higher layer parameter. If the starting bit of the first bit block is the fourth bit, the position of the fourth bit in the first DCI format is configured by the network device through the higher layer parameter. The case where the third bit and the fifth bit are the starting bits is similar, and will not be described again.

In some embodiments, the bits in the first bit set are continuous or discontinuous. For example, if the first bit set includes the fourth bit (x3) and the fifth bit (x4), there may or may not be other bit(s) between the fourth bit (x3) and the fifth bit (x4).

In some embodiments, the bits in the second bit set are continuous or discontinuous. For example, if the second bit set includes the first bit (x0) and the second bit (x1), there may or may not be other bit(s) between the first bit (x0) and the second bit (x1).

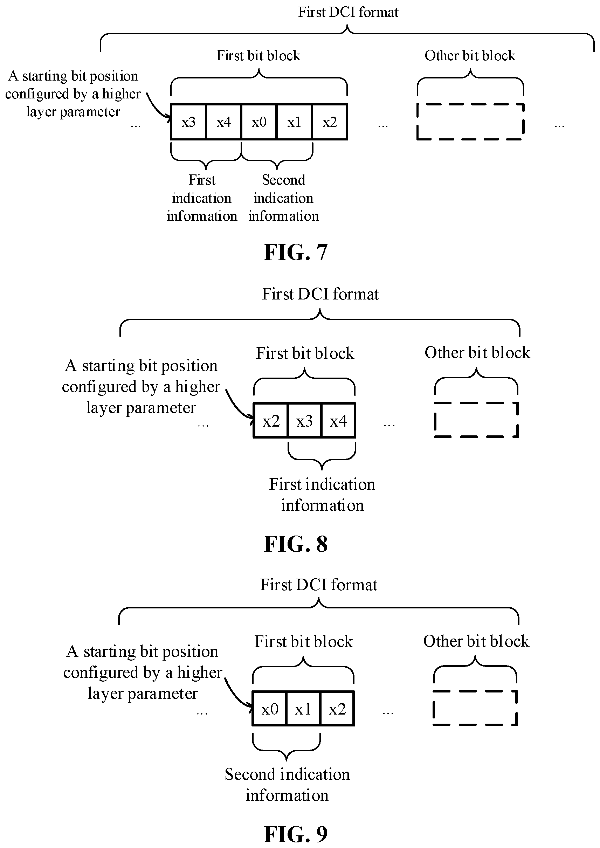

In some embodiments, the first bit set and the second bit set are consecutive bits, that is, in the first DCI format, there are no other bit(s) between the first bit set and the second bit set. For example, the reference is made to FIG. 6 and FIG. 7.

In some embodiments, the first bit set and the second bit set are discontinuous bits, that is, in the first DCI format, there are other bit(s) between the first bit set and the second bit set. For example, the reference is made to FIG. 5.

For example, in a case that the first cell is configured with the first discontinuous communication configuration, the second discontinuous communication configuration, and triggering the NES event by using DCI, if the first discontinuous communication configuration includes the first cell DTX configuration and the first cell DRX configuration, and the second discontinuous communication configuration includes the second cell DTX configuration and the second cell DRX configuration, the first bit block includes the first bit (x0), the second bit (x1), the third bit (x2), the fourth bit (x3), and the fifth bit (x4), that is, the first bit block includes a total of 5 bits.

In some embodiments, the arrangement order of the respective bit sets in the first bit block from a most significant bit to a least significant bit is: the second bit set, the third bit set, the first bit set, or the arrangement order of the respective bits in the first bit block from a most significant bit to a least significant bit is: the first bit (x0), the second bit (x1), the third bit (x2), the fourth bit (x3), the fifth bit (x4), that is, the first bit block is illustrated in FIG. 5. The first bit serves as a starting bit in the first bit block, and the bit position of the first bit in the first DCI format is configured by the network device through a higher layer parameter.

In some embodiments, the arrangement order of respective bit sets in the first bit block from a most significant bit to a least significant bit is: the second bit set, the first bit set, the third bit set, or the arrangement order of respective bits in the first bit block from a most significant bit to a least significant bit is: the first bit (x0), the second bit (x1), the fourth bit (x3), the fifth bit (x4), the third bit (x2), that is, the first bit block is illustrated in FIG. 6. The first bit serves as a starting bit in the first bit block, and the bit position of the first bit in the first DCI format is configured by the network device through a higher layer parameter.

In some embodiments, the arrangement order of respective bit sets in the first bit block from a most significant bit to a least significant bit is: the first bit set, the second bit set, the third bit set, or the arrangement order of respective bits in the first bit block from a most significant bit to a least significant bit is: the fourth bit (x3), the fifth bit (x4), the first bit (x0), the second bit (x1), the third bit (x2), that is, the first bit block is illustrated in FIG. 7. The fourth bit serves as a starting bit in the first bit block, and the bit position of the fourth bit in the first DCI format is configured by the network device through a higher layer parameter.

Respective bit sets in the first bit block may be in other arrangement orders, and respective bits in the first bit block may be in other arrangement orders. The arrangement solutions in all cases are not listed one by one in the embodiments of the present disclosure, but it may be understood that the first bit block under other arrangement orders may be designed with reference to the above contents.

For example, in a case that the first cell is configured with the first discontinuous communication configuration, the second discontinuous communication configuration, and triggering the NES event by using DCI, if the first discontinuous communication configuration includes the first cell DTX configuration and the second discontinuous communication configuration includes the second cell DRX configuration, the first bit block includes the second bit, the third bit, and the fourth bit, that is, the first bit block includes a total of 3 bits.

In some embodiments, the arrangement order of respective bit sets in the first bit block from a most significant bit to a least significant bit is: the second bit set, the third bit set, the first bit set, or the arrangement order of respective bits in the first bit block from a most significant bit to a least significant bit is: the second bit, the third bit, the fourth bit. The second bit serves as a starting bit in the first bit block, and the bit position of the second bit in the first DCI format is configured by the network device through a higher layer parameter.

In some embodiments, the arrangement order of respective bit sets in the first bit block from a most significant bit to a least significant bit is: the second bit set, the first bit set, the third bit set, or the arrangement order of respective bits in the first bit block from a most significant bit to a least significant bit is: the second bit, the fourth bit, the third bit. The second bit serves as a starting bit in the first bit block, and the bit position of the second bit in the first DCI format is configured by the network device through a higher layer parameter.

In some embodiments, the arrangement order of respective bit sets in the first bit block from a most significant bit to a least significant bit is: the first bit set, the second bit set, the third bit set, or the arrangement order of respective bits in the first bit block from a most significant bit to a least significant bit is: the fourth bit, the second bit, the third bit. The fourth bit serves as a starting bit in the first bit block, and the bit position of the fourth bit in the first DCI format is configured by the network device through a higher layer parameter.

It will be appreciated that the first bit block in other arrangement orders may be designed with reference to the above.

For example, in a case that the first cell is configured with the first discontinuous communication configuration, the second discontinuous communication configuration, and triggering the NES event by using DCI, if the first discontinuous communication configuration includes the first cell DRX configuration and the second discontinuous communication configuration includes the second cell DTX configuration, the first bit block includes the first bit, the third bit, and the fifth bit, that is, the first bit block includes a total of 3 bits.

In some embodiments, the arrangement order of respective bit sets in the first bit block from a most significant bit to a least significant bit is: the second bit set, the third bit set, the first bit set, or the arrangement order of respective bits in the first bit block from a most significant bit to a least significant bit is: the first bit, the third bit, the fifth bit. The first bit serves as a starting bit in the first bit block, and the bit position of the first bit in the first DCI format is configured by the network device through a higher layer parameter.

It will be appreciated that the first bit block in other arrangement orders may be designed with reference to the above.

For example, in a case that the first cell is configured with the first discontinuous communication configuration and triggering the NES event by using DCI, if the first discontinuous communication configuration includes the first cell DTX configuration and the first cell DRX configuration, the first bit block includes the third bit, the fourth bit, and the fifth bit, that is, the first bit block includes a total of 3 bits.

In some embodiments, the arrangement order of respective bit sets in the first bit block from a most significant bit to a least significant bit is: the third bit set, the first bit set, or the arrangement order of respective bits in the first bit block from a most significant bit to a least significant bit is: the third bit (x2), the fourth bit (x3), the fifth bit (x4). That is, the first bit block is illustrated in FIG. 8. The third bit serves as a starting bit in the first bit block, and the bit position of the third bit in the first DCI format is configured by the network device through a higher layer parameter.

In some embodiments, the arrangement order of respective bit sets in the first bit block from a most significant bit to a least significant bit is: the first bit set, the third bit set, or the arrangement order of respective bits in the first bit block from a most significant bit to a least significant bit is: the fourth bit (x3), the fifth bit (x4), the third bit (x2). The fourth bit serves as a starting bit in the first bit block, and the bit position of the fourth bit in the first DCI format is configured by the network device through a higher layer parameter.

It will be appreciated that the first bit block in other arrangement orders may be designed with reference to the above.

For example, in a case that the first cell is configured with the first discontinuous communication configuration, if the first discontinuous communication configuration includes the first cell DTX configuration and the first cell DRX configuration, the first bit block includes the fourth bit and the fifth bit, that is, the first bit block includes a total of 2 bits.

In some embodiments, the arrangement order of respective bits in the first bit block from a most significant bit to a least significant bit is: the fourth bit (x3), the fifth bit (x4). The fourth bit serves as a starting bit in the first bit block, and the bit position of the fourth bit in the first DCI format is configured by the network device through a higher layer parameter.

It will be appreciated that the first bit block in other arrangement orders may be designed with reference to the above.

For example, in a case that the first cell is configured with the second discontinuous communication configuration and triggering the NES event by using DCI, if the second discontinuous communication configuration includes the second cell DTX configuration and the second cell DRX configuration, the first bit block includes the first bit (x0), the second bit (x1), and the third bit (x2), that is, the first bit block includes a total of 3 bits.

In some embodiments, the arrangement order of respective bit sets in the first bit block from a most significant bit to a least significant bit is: the second bit set, the third bit set, or the arrangement order of respective bits in the first bit block from a most significant bit to a least significant bit is: the first bit (x0), the second bit (x1), the third bit (x2). That is, the first bit block is illustrated in FIG. 9. The first bit serves as a starting bit in the first bit block, and the bit position of the first bit in the first DCI format is configured by the network device through a higher layer parameter.

In some embodiments, the arrangement order of respective bit sets in the first bit block from a most significant bit to a least significant bit is: the third bit set, the second bit set, or the arrangement order of respective bits in the first bit block from a most significant bit to a least significant bit is: the third bit (x2), the first bit (x0), the second bit (x1). The third bit serves as a starting bit in the first bit block, and the bit position of the third bit in the first DCI format is configured by the network device through a higher layer parameter.

It will be appreciated that the first bit block in other arrangement orders may be designed with reference to the above.

For example, in a case that the first cell is configured with the second discontinuous communication configuration, if the second discontinuous communication configuration includes the second cell DTX configuration and the second cell DRX configuration, the first bit block includes the first bit and the second bit, that is, the first bit block includes a total of 2 bits.

In some embodiments, the arrangement order of respective bits in the first bit block from a most significant bit to a least significant bit is: the first bit, the second bit. The first bit serves as a starting bit in the first bit block, and the bit position of the first bit in the first DCI format is configured by the network device through a higher layer parameter.

It will be appreciated that the first bit block in other arrangement orders may be designed with reference to the above.

### Second, the second solution is introduced: the first cell is associated with the first bit block and/or the second bit block

In some embodiments, the terminal device is in an RRC connected state.

In some embodiments, the first DCI format includes a total of N bit blocks, and the first bit block and/or the second bit block of the N bit blocks are associated with the first cell. It may also be understood that the first bit block and/or the second bit block are associated with a discontinuous communication configuration on the first cell.

In some embodiments, N bit blocks included in the first DCI format are associated with M cells, N and M are positive integers, and the values of N and M are different. For example, M takes a value less than N.

In some embodiments, the first bit block includes the first bit set, and the first bit set corresponds to the first indication information. The second bit block includes the second bit set, and the second bit block corresponds to the second indication information.

In some embodiments, the N bit blocks include the first bit block and the second bit block, that is, the N bit blocks include the first bit set and the second bit set. The order of the two bit set is referred to above.

In some embodiments, the N bit blocks includes the third bit set, that is, the first DCI format includes the third bit set. The third bit set corresponds to the third indication information, and the third indication information is used for indicating whether the first cell enters the NES mode.

Alternatively, the third bit set is located in the first bit block, that is, the third bit set belongs to the first bit block. For example, if the first DCI format carries the first indication information and the third indication information, the first bit block includes the first bit set and the third bit set. If the first DCI format carries the third indication information, the first bit block includes the third bit set.

Alternatively, the third bit set is located in the second bit block, that is, the third bit set belongs to the second bit block. For example, if the first DCI format carries the second indication information and the third indication information, the second bit block includes the second bit set and the third bit set. If the first DCI format carries the third indication information, the second bit block includes the third bit set.

Alternatively, the third bit set is independent of the first bit block and the second bit block, that is, the third bit set does not belong to neither the first bit block nor the second bit block. For example, if the first DCI format carries the first indication information, the second indication information, and the third indication information, the N bit blocks include the first bit block, the second bit block, and the third bit set.

In the embodiments of the present disclosure, the third bit set belonging to the second bit block is taken as an example for schematic description. Therefore, the second bit block includes the second bit set and/or the third bit set.

In some embodiments, the N bit blocks include the first bit set and the third bit set. The order of the two bit sets is referred to above.

In some embodiments, the N bit blocks include the first bit set, the second bit set, and the third bit set. The order of the three bit sets is referred to above.

In some embodiments, the second bit block includes the second bit set, that is, the N bit blocks includes the second bit set. In a case that the first discontinuous communication configuration includes the first cell DTX configuration and the second discontinuous communication configuration includes the second cell DTX configuration, the first bit in the second bit set is adjusted to indicate activating or deactivating the first cell DTX configuration; and/or, in a case that the first discontinuous communication configuration includes the first cell DRX configuration and the second discontinuous communication configuration includes the second cell DRX configuration, the second bit in the second bit set is adjusted to indicate activating or deactivating the first cell DRX configuration.

The first bit is a bit for indicating activating or deactivating the second cell DTX configuration, and the second bit is a bit for indicating activating or deactivating the second cell DRX configuration.

The first bit in the second bit set is adjusted to indicate activating or deactivating the first cell DTX configuration, which may be understood that the first bit in the second bit set is replaced with a bit for indicating activating or deactivating the first cell DTX configuration. The second bit in the second bit set is adjusted to indicate activating or deactivating the first cell DRX configuration, which may be understood that the second bit in the second bit set is replaced with a bit for indicating activating or deactivating the first cell DRX configuration.

In some embodiments, the second bit block includes the second bit set, that is, the N bit blocks include the second bit set. In a case that the first discontinuous communication configuration includes the first cell DTX configuration and the second discontinuous communication configuration includes the second cell DTX configuration, the second bit set includes a bit for indicating activating or deactivating the first cell DTX configuration and does not include a bit for indicating activating or deactivating the second cell DTX configuration; and/or, in a case that the first discontinuous communication configuration includes the first cell DRX configuration and the second discontinuous communication configuration includes the second cell DRX configuration, the second bit set includes a bit for indicating activating or deactivating the first cell DRX configuration and does not include a bit for indicating activating or deactivating the second cell DRX configuration.

In some embodiments, in a case that the first discontinuous communication configuration includes the first cell DTX configuration and the second discontinuous communication configuration includes the second cell DTX configuration, the first bit block includes the first bit set, the first bit set includes a bit for indicating activating or deactivating the first cell DTX configuration, and the second bit set does not include a bit for indicating activating or deactivating the second cell DTX configuration; and/or, in a case that the first discontinuous communication configuration includes the first cell DRX configuration and the second discontinuous communication configuration includes the second cell DRX configuration, the first bit block includes the first bit set, the first bit set includes a bit for indicating activating or deactivating the first cell DRX configuration, and the second bit set does not include a bit for indicating activating or deactivating the second cell DRX configuration.

In some embodiments, in a case that the first discontinuous communication configuration includes the first cell DTX configuration and the first cell DRX configuration, and the second discontinuous communication configuration includes the second cell DTX configuration and the second cell DRX configuration, the first bit block includes the first bit set, and the first bit set includes a bit for indicating activating or deactivating the first cell DTX configuration, and a bit for indicating activating or deactivating the first cell DRX configuration. The number of bits of the second bit set is 0.

In some embodiments, in a case that the first discontinuous communication configuration includes the first cell DTX configuration and the second discontinuous communication configuration includes the second cell DTX configuration, a bit in the second bit set used to indicate activating or deactivating the second cell DTX configuration is an invalid bit; and/or, in a case that the first discontinuous communication configuration includes the first cell DRX configuration and the second discontinuous communication configuration includes the second cell DRX configuration, a bit in the second bit set used to indicate activating or deactivating the second cell DRX configuration is an invalid bit.

Here, the bit in the second bit used to indicate activating or deactivating the second cell DTX configuration set is an invalid bit, which may be understood that the bit originally used to indicate activating or deactivating the second cell DTX configuration included in the second bit set is now not used to indicate activating or deactivating the second cell DTX configuration, or that the terminal device does not determine whether to activate the second cell DTX configuration according to the bit in the second bit set used to indicate activating or deactivating the second cell DTX configuration. The bit in the second bit used to indicate activating or deactivating the second cell DRX configuration set is an invalid bit, which may be understood that the bit originally used to indicate activating or deactivating the second cell DRX configuration included in the second bit set is now not used to indicate activating or deactivating the second cell DRX configuration, or that the terminal device does not determine whether to activate the second cell DRX configuration according to the bit in the second bit set used to indicate activating or deactivating the second cell DRX configuration.

In some embodiments, the first bit set includes the fourth bit and/or the fifth bit. For ease of explanation, a bit y0 may be used to represent the fourth bit, and a bit y1 may be used to represent the fifth bit. The first bit set is {y0}, or {y1}, or {y0, y1}, or {y1, y0}. The fourth bit is used for indicating activating or deactivating the first cell DTX configuration, and the fifth bit is used for indicating activating or deactivating the first cell DRX configuration.

In some embodiments, when the first bit set includes the fourth bit and the fifth bit, the fourth bit is a most significant bit and the fifth bit is a least significant bit. That is, the first bit set is {y0, y1}.

In some embodiments, when the first bit set includes the fourth bit and the fifth bit, the fourth bit is a least significant bit and the fifth bit is a most significant bit. That is, the first bit set is {y1, y0}.

In some embodiments, the third bit set includes the third bit, and the bit x2 may be used to represent the third bit. That is, the third bit set is {x2}. The third bit is used to indicate whether the first cell enters the NES mode.

In some embodiments, the second bit set includes the first bit and/or the second bit. For ease of explanation, a bit x0 may be used to represent the first bit, and a bit x1 may be used to represent the second bit. That is, the second bit set is {x0}, or {x1}, or {x0, x1}, or {x1, x0}. The first bit is used for indicating activating or deactivating the second cell DTX configuration and the second bit is used for indicating activating or deactivating the second cell DRX configuration.

In some embodiments, when the second bit set includes the first bit and the second bit, the first bit is a most significant bit and the second bit is a least significant bit. That is, the second bit set is {x0, x1}.

In some embodiments, when the second bit set includes the first bit and the second bit, the first bit is a least significant bit and the second bit is a most significant bit. That is, the second bit set is {x1, x0}.

It will be understood that the value of each of the above-mentioned bits may be 0 or 1, respectively. The present disclosure does not limit the value of each bit. As an example, when the third bit takes a value of 1 (that is, x2 takes a value of 1), it indicates that the first cell enters the NES mode.

In some embodiments, the respective bits in the first bit block or the second bit block are contiguously arranged. For example, the first bit block includes bits of {y0, y1}, and the second bit block includes bits of {x0, x1, x2}.

In some embodiments, the arrangement order of the respective bits in the first bit block from a most significant bit to a least significant bit is: fourth bit, fifth bit; or, the fifth bit, the fourth bit.

In some embodiments, the arrangement order of the respective bits in the second bit block from a most significant bit to a least significant bit is: the first bit, the second bit, the third bit; or, the first bit, the third bit, the second bit; or, the second bit, the first bit, the third bit; or, the second bit, the third bit, the first bit; or, the third bit, the first bit, the second bit; or, the third bit, the second bit, the first bit.

In some embodiments, the starting position of the first bit block is configured by the network device through a higher layer parameter or higher layer signaling, which may be understood that the bit position of the starting bit of the first bit block in the first DCI format is configured by the network device through a higher layer parameter or higher layer signaling. For example, if the starting bit of the first bit block is the fourth bit, the position of the fourth bit in the first DCI format is configured by the network device through the higher layer parameter. For example, if the starting bit of the first bit block is the fifth bit, the position of the fifth bit in the first DCI format is configured by the network device through the higher layer parameter.

In some embodiments, the starting position of the second bit block is configured by the network device through a higher layer parameter, which may be understood that the bit position of the starting bit of the second bit block in the first DCI format is configured by the network device through the higher layer parameter. For example, if the starting bit of the second bit block is the first bit, the position of the first bit in the first DCI format is configured by the network device through the higher layer parameter. For example, if the starting bit of the second bit block is the second bit, the position of the second bit in the first DCI format is configured by the network device through the higher layer parameter. If the starting bit of the second bit block is the third bit, the position of the third bit in the first DCI format is configured by the network device through the higher layer parameter.

In some embodiments, the starting position of the third bit set is configured by the network device through the higher layer parameter. Exemplarily, the position of the third bit in the first DCI format is configured by the network device through the higher layer parameter.

In some embodiments, the bits in the first bit set are continuous or discontinuous. For example, if the first bit set includes the fourth bit (y0) and the fifth bit (y1), there may or may not be other bit(s) between the fourth bit (y0) and the fifth bit (y1).

In some embodiments, the bits in the second bit set are continuous or discontinuous. For example, if the second bit set includes the first bit (x0) and the second bit (x1), there may or may not be other bit(s) between the first bit (x0) and the second bit (x1).

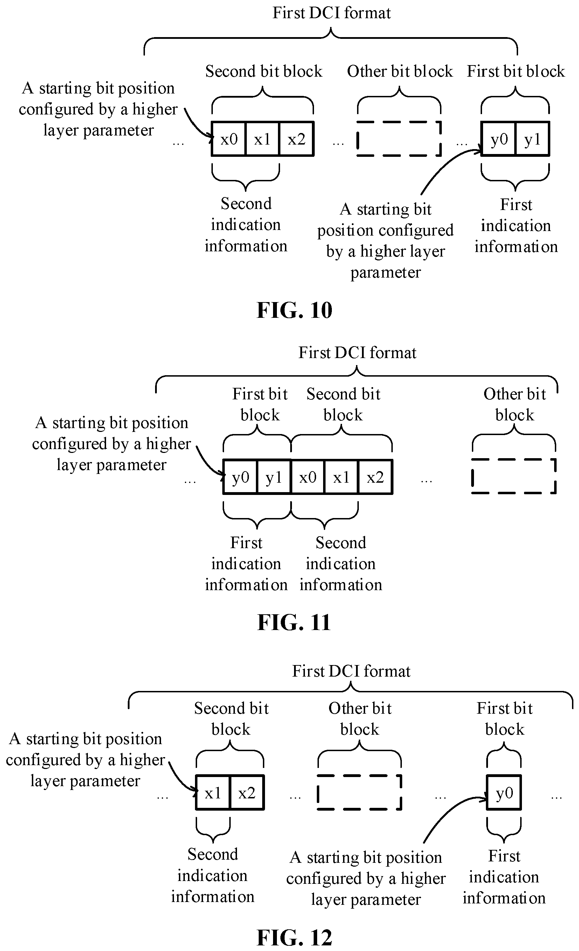

In some embodiments, the first bit set and the second bit set are consecutive bits, that is, in the first DCI format, there are no other bit(s) between the first bit set and the second bit set. For example, the reference is made to FIG. 11.

In some embodiments, the first bit set and the second bit set are discontinuous bits, that is, in the first DCI format, there are other bit(s) between the first bit set and the second bit set. For example, the reference is made to FIG. 10.

For example, in a case that the first cell is configured with the first discontinuous communication configuration, the second discontinuous communication configuration, and triggering the NES event by using DCI, if the first discontinuous communication configuration includes the first cell DTX configuration and the first cell DRX configuration, and the second discontinuous communication configuration includes the second cell DTX configuration and the second cell DRX configuration, the N bit blocks include the first bit (x0), the second bit (x1), the third bit (x2), the fourth bit (y0), and the fifth bit (y1). The first bit block of the N bit blocks includes the fourth bit (y0) and the fifth bit (y1), and the second bit block of the N bit blocks includes the first bit (x0), the second bit (x1), and the third bit (x2).

In some embodiments, the arrangement order of the respective bits in the first bit block from a most significant bit to a least significant bit is: the fourth bit (y0) and the fifth bit (y1), and the arrangement order of the respective bits in the second bit block from a most significant bit to a least significant bit is: the first bit (x0), the second bit (x1) and the third bit (x2), that is, the first bit block and the second bit block in the first DCI format are illustrated in FIG. 10. The first bit serves as a starting bit in the second bit block, the fourth bit serves as a starting bit in the first bit block, and the bit positions of the first bit and the fourth bit in the first DCI format are configured by the network device through higher layer parameters. The first bit block and the second bit block are discontinuous bit blocks, and there are other bit block(s) between the first bit block and the second bit block.

In some embodiments, the arrangement order of the respective bits in the first bit block from a most significant bit to a least significant bit is: the fourth bit (y0) and the fifth bit (y1), and the arrangement order of the respective bits in the second bit block from a most significant bit to a least significant bit is: the first bit (x0), the second bit (x1) and the third bit (x2), that is, the first bit block and the second bit block in the first DCI format are illustrated in FIG. 11. The first bit block and the second bit block are continuous bit blocks, and there are no other bit block between the first bit block and the second bit block. The first bit is a starting bit in the second bit block, and the fourth bit is a starting bit in the first bit block. Alternatively, the bit positions of the first bit and the fourth bit in the first DCI format are configured by the network device through higher layer parameters. Alternatively, since the first bit block and the second bit block are continuous, the network device only needs to configure the bit position of the fourth bit through the higher layer parameter.

It will be appreciated that the first DCI format under other arrangement orders may be designed with reference to the above.

For example, in a case that the first cell is configured with the first discontinuous communication configuration, the second discontinuous communication configuration, and triggering the NES event by using DCI, if the first discontinuous communication configuration includes the first cell DTX configuration, and the second discontinuous communication configuration includes the second cell DRX configuration, then the N bit blocks include the fourth bit, the second bit, and the third bit, and the N bit blocks include a total of 3 bits. The second bit (x1) and the third bit (x2) belong to the second bit block, and the fourth bit (y0) belongs to the first bit block.

In some embodiments, the arrangement order of the respective bits in the N bit blocks from a most significant bit to a least significant bit is: the second bit, the third bit, the fourth bit, that is, the first DCI format is illustrated in FIG. 12. The positions of the second bit and the fourth bit in the first DCI format are configured by the network device through higher layer parameters. The first bit block and the second bit block may be continuous or discontinuous.

It will be appreciated that the first DCI format under other arrangement orders may be designed with reference to the above.

For example, in a case that the first cell is configured with the first discontinuous communication configuration, the second discontinuous communication configuration, and triggering the NES event by using DCI, if the first discontinuous communication configuration includes the first cell DRX configuration, and the second discontinuous communication configuration includes the second cell DTX configuration, the N bit blocks include the fifth bit, the first bit, and the third bit. The first bit block of the N bit blocks includes the fifth bit (y1), and the second bit block of the N bit blocks includes the first bit (x0) and the third bit (x2).

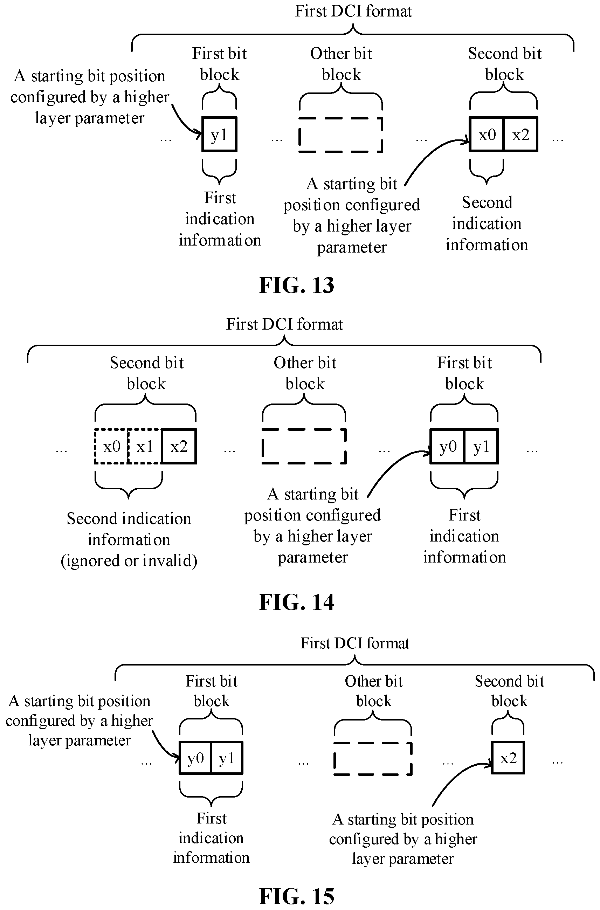

In some embodiments, the first bit block includes only the fifth bit, and the arrangement order of respective bits in the second bit block from a most significant bit to a least significant bit is: the first bit, the third bit, that is, the first bit block and the second bit block in the first DCI format are as illustrated in FIG. 13. The positions of the fifth bit and the first bit in the first DCI format are configured by the network device through higher layer parameters. The first bit block and the second bit block may be continuous or discontinuous.

It will be appreciated that the first DCI format under other arrangement orders may be designed with reference to the above.

For example, in a case that the first cell is configured with the first discontinuous communication configuration, if the first discontinuous communication configuration includes the first cell DTX configuration and the first cell DRX configuration, the N bit blocks include the fourth bit and the fifth bit. The first bit block of the N bit blocks includes the fourth bit and the fifth bit. In other words, only the first bit block of the N bit blocks is associated with the first cell.

In some embodiments, the arrangement order of the respective bits in the first bit block from a most significant bit to a least significant bit is: the fourth bit (y0), the fifth bit (y1), and the position of the fourth bit may be configured by the network device through the high layer parameter.

It will be appreciated that the first DCI format under other arrangement orders may be designed with reference to the above.

In some embodiments, in the above first solution and/or second solution, if the first cell is not configured with a certain configuration, the number of bits corresponding to the configuration in the first DCI format is 0. In other words, the corresponding bit is not included in the first DCI format. For example, if the first cell is not configured with the second cell DTX configuration, the first bit is not included in the first DCI format. For example, if the first cell is not configured with the second cell DRX configuration, the second bit is not included in the first DCI format. For example, if the first cell is not configured with triggering whether to enter NES mode by using DCI, the third bit is not included in the first DCI format. For example, if the first cell is not configured with the first cell DTX configuration, the fourth bit is not included in the first DCI format. For example, if the first cell is not configured with the first cell DRX configuration, the fifth bit is not included in the first DCI format.

For example, if the first cell is not configured with the second cell DTX configuration and the second cell DRX configuration, the number of bits of the first bit and the second bit are both 0, and the second bit set is an empty set. That is, the second bit set is not included in the first DCI format.

For example, if the first cell is not configured with the first cell DTX configuration and the first cell DRX configuration, the number of bits of the fourth bit and the fifth bit are both 0, and the first bit set is an empty set. That is, the first bit set is not included in the first DCI format.

For example, if the first cell is not configured with triggering whether to enter NES mode by using the DCI, the number of bits of the third bit is 0, and the third bit set is an empty set. That is, the third bit set is not included in the first DCI format.

In some embodiments, in a case that the first discontinuous communication configuration includes the first cell DTX configuration and the second discontinuous communication configuration includes the second cell DTX configuration, the bit in the second bit set used to indicate activating or deactivating the second cell DTX configuration is an invalid bit; and/or, in a case that the first discontinuous communication configuration includes the first cell DRX configuration and the second discontinuous communication configuration includes the second cell DRX configuration, the bit in the second bit set used to indicate activating or deactivating the second cell DRX configuration is an invalid bit.

In some embodiments, in the above first solution and/or the second solution, in a case that the first DCI format carries the first indication information and the second indication information, the first indication information is valid indication information, and the second indication information is invalid indication information; or, in a case that the first DCI format carries the first indication information and the second indication information, the terminal device ignores the second indication information.

For example, in a case that the first cell is configured with the first discontinuous communication configuration, the second discontinuous communication configuration, and triggering the NES event by using DCI, it is assumed that the first discontinuous communication configuration includes the first cell DTX configuration and the first cell DRX configuration, and the second discontinuous communication configuration includes the second cell DTX configuration and the second cell DRX configuration. In this example, the arrangement order of the respective bits in the second bit block from a most significant bit to a least significant bit is: the first bit (x0), the second bit (x1), the third bit (x2), the arrangement order of respective bits in the first bit block from a most significant bit to a least significant bit is: the fourth bit (y0) and the fifth bit (y1). As illustrated in FIG. 14, the second indication information is invalid indication information, that is, the bit x0 and the bit x1 are invalid bits. Alternatively, the terminal device ignores the second indication information, that is, the terminal device ignores the bit x0 and bit x1.

Taking the first DCI format illustrated in FIG. 5 as an example, the second indication information is invalid indication information, that is, the bit x0 and the bit x1 are invalid bits. Alternatively, the terminal device ignores the second indication information, that is, the terminal device ignores the bit x0 and bit x1.

Taking the first DCI format illustrated in FIG. 12 as an example, the second indication information is invalid indication information, that is, the bit x1 is an invalid bit. Alternatively, the terminal device ignores the second indication information, that is, the terminal device ignores the bit x1.

In other configuration cases under the second solution, the design of the first DCI format may refer to the related examples shown in the first solution, which will not be described in detail here.

In some embodiments, in a case that the first discontinuous communication configuration includes the first cell DTX configuration and the second discontinuous communication configuration includes the second cell DTX configuration, the first bit block includes the first bit set, the first bit set includes a bit for indicating activating or deactivating the first cell DTX configuration, the second bit set does not includes a bit for indicating activating or deactivating the second cell DTX configuration; and/or, in a case that the first discontinuous communication configuration includes the first cell DRX configuration and the second discontinuous communication configuration includes the second cell DRX configuration, the first bit block includes the first bit set, the first bit set includes the bit for indicating activating or deactivating the first cell DRX configuration, and the second bit set does not include the bit for indicating activating or deactivating the second cell DRX configuration.

In some embodiments, in the above first solution and/or the second solution, when the first DCI format carries the first indication information, the first DCI format does not carry the second indication information.

For example, in a case that the first cell is configured with the first discontinuous communication configuration, the second discontinuous communication configuration, and triggering the NES event by using DCI, if the first discontinuous communication configuration includes the first cell DTX configuration and the first cell DRX configuration, and the second discontinuous communication configuration includes the second cell DTX configuration and the second cell DRX configuration, the first DCI format includes the third bit (x2), the fourth bit (y0), and the fifth bit (y1), and does not include the first bit (x0) and the second bit (x1), as illustrated in FIG. 15. The third bit (x2) belongs to the second bit block, and the fourth bit (y0) and the fifth bit (y1) belong to the first bit block. There may be other bit block(s) between the first bit block and the second bit block (that is, the first bit block and the second bit block are discontinuous), or there may not be other bit block(s) between the first bit block and the second bit block (that is, the first bit block and the second bit block are continuous).

In some embodiments, the N bit blocks include the second bit set. In a case that the first discontinuous communication configuration includes the first cell DTX configuration and the second discontinuous communication configuration includes the second cell DTX configuration, the first bit in the second bit set is adjusted to indicate activating or deactivating the first cell DTX configuration; and/or, in a case that the first discontinuous communication configuration includes the first cell DRX configuration and the second discontinuous communication configuration includes the second cell DRX configuration, the second bit in the second bit set is adjusted to indicate activating or deactivating the first cell DRX configuration.

The first bit is a bit for indicating activating or deactivating the second cell DTX configuration, and the second bit is a bit for indicating activating or deactivating the second cell DRX configuration.

Exemplarily, in a case that the first cell is configured with at least one of the first discontinuous communication configuration, the second discontinuous communication configuration, or triggering the NES event by using DCI, the N bit blocks include the second bit set (that is, the first DCI format includes the second bit set). In a case that the first discontinuous communication configuration includes the first cell DTX configuration, and/or the second discontinuous communication configuration includes the second cell DTX configuration, the second bit set includes the first bit (x0). In a case that the first discontinuous communication configuration includes the first cell DRX configuration, and/or the second discontinuous communication configuration includes the second cell DRX configuration, the second bit set includes the second bit (x1). In a case that triggering the NES event by using the DCI is configured, the second bit set includes the third bit (x2). As illustrated in FIG. 9, for example, the arrangement order of respective bits in the second bit set from a most significant bit to a least significant bit is: the first bit (x0), the second bit (x1), the third bit (x2).

In some embodiments, in a case that the first discontinuous communication configuration includes the first cell DTX configuration, or in a case that the first discontinuous communication configuration includes the first cell DTX configuration and the second discontinuous communication configuration includes the second cell DTX configuration, the first bit (x0) is adjusted to indicate activating or deactivating the first cell DTX configuration.

In some embodiments, in a case that the first discontinuous communication configuration does not include the first cell DTX configuration and the second discontinuous communication configuration includes the second cell DTX configuration, the first bit (x0) is used to indicate activating or deactivating the second cell DTX configuration.

In some embodiments, in a case that the first discontinuous communication configuration includes the first cell DRX configuration, or in a case that the first discontinuous communication configuration includes the first cell DRX configuration and the second discontinuous communication configuration includes the second cell DRX configuration, the second bit (x1) is adjusted to indicate activating or deactivating the first cell DRX configuration.

In some embodiments, in a case that the first discontinuous communication configuration does not include the first cell DRX configuration and the second discontinuous communication configuration includes the second cell DRX configuration, the second bit (x1) is used for indicating activating or deactivating the second cell DRX configuration.

It should be noted that the operation 420 is an optional operation. The execution order of the operations 420 and 440 may be adjusted according to the actual situation. For example, the present disclosure is not limited to the fact that the operation 440 is performed before the operation 420, the operation 440 is performed after the operation 420, or the operation 440 and the operation 420 are performed simultaneously.

In summary, the method provided by the embodiments of the present disclosure provides a feasible solution for the coexistence and use of different discontinuous communication configurations, and it is not necessary to separately design DCI formats for the first indication information and the second indication information, and it is realized by multiplexing the first DCI format, which is beneficial to reducing signaling overhead and improving indication efficiency. In addition, the first indication information and the second indication information are supported to multiplex the DCI format 2_9, so that the method provided by the embodiment of the present disclosure has good forward compatibility and does not conflict with a commonly used indication solution. Further, when the first cell is configured with different discontinuous communication configurations, it is supported to flexibly indicate whether each configuration is activated by using the same DCI format, thereby improving the flexibility and accuracy of indication. Moreover, it is also supported to indicate whether the first cell enters the network energy saving mode, which is helpful to further improve the overall efficiency of the communication system.

In some embodiments, different DCI formats are used for activating or deactivating the first discontinuous communication configuration and activating or deactivating the second discontinuous communication configuration. Such a design is advantageous for flexibly indicating whether different discontinuous communication configurations are activated, improving the indication accuracy. For details, the reference is made to the embodiment shown in FIG. 4.

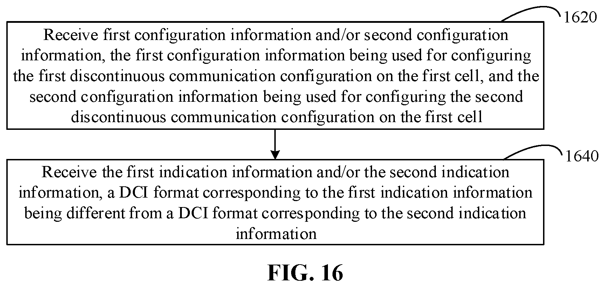

FIG. 16 illustrates a schematic flowchart of a method for indicating discontinuous communication configuration provided by an exemplary embodiment of the present disclosure. The method is performed by a terminal device, and the method includes at least some of the following operations.

In operation 1620, the first configuration information and/or the second configuration information is received, the first configuration information is used for configuring the first discontinuous communication configuration on the first cell, and the second configuration information is used for configuring the second discontinuous communication configuration on the first cell.

For the related contents of the operation 1620, the reference is made to the operation 420 and the operation 320, which will not be described again here.

In operation 1640, the first indication information and/or the second indication information is received, the DCI format corresponding to the first indication information is different from the DCI format corresponding to the second indication information.

In some embodiments, the first indication information is carried in the second DCI format, and/or the second indication information is carried in the first DCI format. The second DCI format is different from the first DCI format.

In some embodiments, the second DCI format corresponds to the second RNTI and/or the second common search space set, and the second RNTI and/or the second common search space set is configured by the network device through a higher layer parameter or higher layer signaling.

In the embodiments of the present disclosure, the high layer parameter or the high-layer signaling includes at least one of the following: RRC signaling, a system message, or a MAC CE.

In some embodiments, in a case that the terminal device is in the RRC connected state, or the RRC idle state, or the RRC non-active state, the first indication information is carried in the second DCI format.

In some embodiments, the first DCI format corresponds to the first RNTI and/or the first common search space set, and the first RNTI and/or the first common search space set is configured by the network device through a higher layer parameter.

In some embodiments, the first RNTI is a CellDTRX-RNTI associated with DCI format 2_9.

In some embodiments, the first DCI format includes DCI format 2_9.

The relevant content of using the first DCI format to indicate activating or deactivating of the second discontinuous communication configuration, reference may be made to the second solution in the operation 440, that is, the relevant content of "the first cell is associated with the first bit block and/or the second bit block". The difference from the second solution in the operation 440 is that the first DCI format in the operation 1640 does not include the first bit block, that is, the first DCI format in the operation 1640 does not include the first bit set.

In some embodiments, referring to the operation 440, the first DCI format may also be used to indicate whether the first cell enters the NES mode, that is, the first DCI format may further carry the third indication information.

In some embodiments, referring to the operation 440, the second DCI format may also be used to indicate whether the first cell enters the NES mode, that is, the second DCI format may further carry the third indication information.

In some embodiments, the second DCI format is used to indicate activating or deactivating the first discontinuous communication configuration.

In some embodiments, the first indication information is different from the second indication information. Alternatively, the first indication information and the second indication information are different in at least one of the following aspects: corresponding bits, carried information, corresponding PDCCHs, corresponding DCI formats, numbers of bits, occupied time domain resources, or occupied frequency domain resources.

For example, the second DCI format is different from the first DCI format. For example, the RNTI corresponding to the second DCI format is different from the RNTI corresponding to the first DCI format. For example, the content indicated by the first indication information is different from the content indicated by the second indication information. For example, the determination method of the first time domain unit corresponding to the first indication information is different from the determination method of the first time domain unit corresponding to the second indication information.

In some embodiments, the terminal device determines whether the first discontinuous communication configuration is activated or deactivated according to the first indication information.

In some embodiments, the terminal device determines whether the second discontinuous communication configuration is activated or deactivated according to the second indication information.

In some embodiments, the terminal device determines whether the first cell enters the NES mode according to the third indication information.

The related contents of the operation 1640 may be referred to the operation 440, which will not be described again here.

In summary, the method provided by the embodiments of the present disclosure supports designing different indication information to activate or deactivate different discontinuous communication configurations, which is beneficial to improving the flexibility and accuracy of the indication. Moreover, it is also supported to indicate whether the first cell enters the network energy saving mode, which is helpful to further improve the overall efficiency of the communication system.

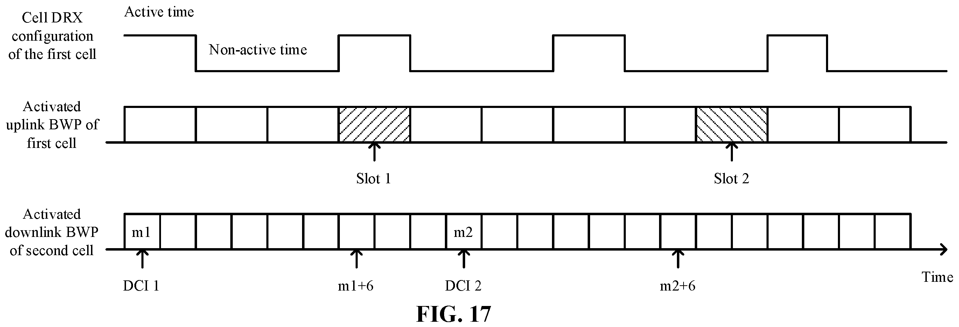

FIG. 17 illustrates a schematic diagram of a method for indicating discontinuous communication configuration provided by an exemplary embodiment of the present disclosure. The method is performed by a terminal device and a network device. The method is applicable to how to determine the effective time of the DCI format when the DCI format is used to indicate activating or deactivating discontinuous communication configurations. The method is applicable to both the embodiment illustrated in FIG. 4 and the embodiment illustrated in FIG. 16. That is, the method is applicable to both the case that the first DCI format is used to indicate activating or deactivating the first discontinuous communication configuration and the second discontinuous communication configuration, and the case that the first DCI format is used for indicating activating or deactivating the second discontinuous communication configuration, and the second DCI format is used for indicating activating or deactivating the first discontinuous communication configuration.

The first DCI format being used for indicating activating or deactivating the first discontinuous communication configuration and the second discontinuous communication configuration is taken as the example for describing. The terminal device is configured to monitor the first DCI format. It is assumed that the terminal device receives the DCI in the first DCI format on the time domain unit m on the activated downlink Bandwidth Part (BWP) of the second cell.

If the DCI in the first DCI format is used to indicate activating the first discontinuous communication configuration on the first cell, the terminal device activates, according to the DCI, the first cell DRX configuration of the first cell starting from the first time domain unit on the activated downlink BWP of the first cell, and/or activates, according to the DCI, the first cell DTX configuration of the first cell starting from the first time domain unit on the activated uplink BWP of the first cell. If the DCI in the first DCI format is used to indicate deactivating the first discontinuous communication configuration on the first cell, the terminal device deactivates, according to the DCI, the first cell DRX configuration of the first cell starting from the first time domain unit on the activated downlink BWP of the first cell, and/or deactivates, according to the DCI, the first cell DTX configuration of the first cell starting from the first time domain unit on the activated uplink BWP of the first cell.

If the DCI in the first DCI format is used to indicate the activating the second discontinuous communication configuration on the first cell, the terminal device activates, according to the DCI, the second cell DRX configuration of the first cell starting from the first time domain unit on the activated downlink BWP of the first cell, and/or activates, the second cell DTX configuration of the first cell starting from the first time domain unit on the activated uplink BWP of the first cell. If the DCI in the first DCI format is used to indicate deactivating the second discontinuous communication configuration on the first cell, the terminal device deactivates, according to the DCI, the second cell DRX configuration of the first cell starting from the first time domain unit on the activated downlink BWP of the first cell, and/or deactivates, according to the DCI, the second cell DTX configuration of the first cell starting from the first time domain unit on the activated uplink BWP of the first cell.

In some embodiments, the first time domain unit is not earlier than the starting position of the time domain unit m + d on the activated downlink BWP of the second cell, and it may also be understood that the position of the first time domain unit is equal to or later than the starting position of the time domain unit m + d on the activated downlink BWP of the second cell.

Here, d is the number of slots determined according to the Sub-Carrier Space (SCS) of the activated downlink BWP of the second cell, and the value is shown in Table 1 below.

**Table 1 Values of d**

| SCS (kHz) | Number of slots (d) |
|---|---|
| 15 | 3 |
| 30 | 6 |
| 60 | 12 |
| 120 | 24 |
| 480 | 96 |
| 960 | 192 |

In the embodiments of the present disclosure, the time domain unit includes at least one of following: a Frame, a Subframe, a Slot, a Mini-Slot, a subslot, a Symbol, a Symbol group, or a time domain unit based on other time domain units.

The embodiments of the present disclosure take a time domain unit including a slot as an example. The first slot is not earlier than the starting position of the slot m + d on the activated downlink BWP of the second cell, that is, the position of the first slot is equal to or later than the starting position of the slot m + d on the activated downlink BWP of the second cell.

For example, the first DCI format is the DCI format 2_9. The first cell of the terminal device is configured with a cell DRX configuration, and the cell DRX configuration is in a non-activated state. As illustrated in FIG. 17, when the terminal device receives the DCI 1 corresponding to the DCI format 2_9 in the slot m1 on the activated downlink BWP of the second cell, and the DCI 1 indicates activating the cell DRX of the first cell, the terminal device activates, according to the DCI 1, the cell DRX from the slot 1 on the activated uplink BWP of the first cell. The slot 1 is not earlier than the starting position of the slot m1+ d on the activated downlink BWP of the second cell. Taking the SCS of the activated downlink BWP of the second cell as 30 kHz and the value of d as 6 as an example, the slot 1 is not earlier than the starting position of the slot m1+6 on the activated downlink BWP of the second cell.

When the terminal device receives the DCI 2 corresponding to the DCI format 2_9 on the slot m2 on the activated downlink BWP of the second cell, the DCI 2 indicates deactivating the cell DRX configuration of the first cell, the terminal device deactivates, according to the DCI 2, the cell DRX from the slot 2 on the activated uplink BWP of the first cell. The slot 2 is no earlier than the starting position of the slot m2+ d on the activated downlink BWP of the second cell. Taking the SCS of the activated downlink BWP of the second cell as 30 kHz and the value of d as 6 as an example, the slot 2 is no earlier than the starting position of the slot m2+6 on the activated downlink BWP of the second cell.

It should be noted that the first cell and the second cell may be the same cell or different cells.

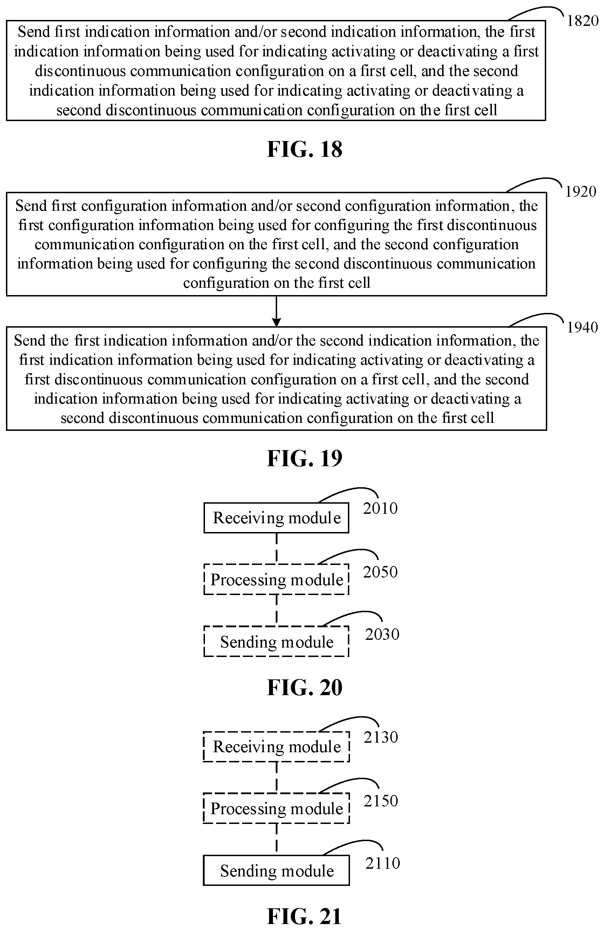

FIG. 18 illustrates a schematic flowchart of a method for indicating discontinuous communication configuration provided by an exemplary embodiment of the present disclosure. The method is performed by a network device, and the method includes at least some of the following operation.

In operation 1820, the first indication information and/or the second indication information is sent, the first indication information is used for indicating activating or deactivating the first discontinuous communication configuration on the first cell, and the second indication information is used for indicating activating or deactivating the second discontinuous communication configuration on the first cell.

The first discontinuous communication configuration is different from the second discontinuous communication configuration.

In some embodiments, the first cell is configured with the first discontinuous communication configuration and/or the second discontinuous communication configuration.

In the embodiments of the present disclosure, the first cell is a serving cell of the terminal device. Alternatively, the first cell includes a serving cell of the terminal device. Alternatively, the first cell includes multiple serving cells of the terminal device. Alternatively, the first cell includes multiple serving cells in one serving cell group of the terminal device.

Exemplarily, the first cell is a primary cell of the terminal device. Exemplarily, the first cell is a secondary cell of the terminal device. Exemplarily, the first cell is a primary secondary cell of the terminal device. Exemplarily, the first cell is a primary cell and a secondary cell of the terminal device. Exemplarily, the first cell is a primary cell and a primary secondary cell of the terminal device. Exemplarily, the first cell is all of the cells in the first cell group of the terminal device, and the like.

In some embodiments, the first indication information is different from the second indication information. Alternatively, the first indication information and the second indication information are different in at least one of the following aspects: corresponding bits, carried information, corresponding PDCCHs, corresponding DCI formats, number of bits, occupied time domain resources, or occupied frequency domain resources.

In some embodiments, the first discontinuous communication configuration includes the first cell DTX configuration, and/or the first cell DRX configuration.

In some embodiments, the second discontinuous communication configuration includes the second cell DTX configuration, and/or the second cell DRX configuration.

In some embodiments, the first discontinuous communication configuration may also be referred to as the first cell DTRX configuration, and the second discontinuous communication configuration may also be referred to as the second cell DTRX configuration. Here, the DTRX may be understood as DTX and/or DRX.

In summary, the method provided by the embodiments of the present disclosure supports activating or deactivating the discontinuous communication configurations on the first cell through the first indication information and the second indication information, and so as to provide a feasible solution for the coexistence and use of different discontinuous communication configurations.

It may be understood that the method provided by the embodiments of the present disclosure is also applicable to scenarios of other discontinuous communication configurations, and the present disclosure is not limited thereto. For example, in a case that the first discontinuous communication configuration and/or the second discontinuous communication configuration are other discontinuous communication configurations, the method provided in the embodiments of the present disclosure may still be applicable. Exemplarily, other discontinuous communication configurations include, but are not limited to, at least one of following: a Connected mode DRX (C-DRX) configuration, a DRX for Multicast/Broadcast Services (MBS) Broadcast, or a DRX for MBS Multicast.

FIG. 19 illustrates a schematic flowchart of a method for indicating discontinuous communication configuration provided by an exemplary embodiment of the present disclosure. The method is performed by a network device, and the method includes at least some of the following operations.

In the operation 1920, the first configuration information and/or the second configuration information is sent, the first configuration information is used for configuring the first discontinuous communication configuration on the first cell, and the second configuration information is used for configuring the second discontinuous communication configuration on the first cell.

For related contents, the reference is made to the operation 420 and the operation 1620, which will not be described again here.

In operation 1940, the first indication information and/or the second indication information is sent, the first indication information is used for indicating activating or deactivating the first discontinuous communication configuration on the first cell, and the second indication information is used for indicating activating or deactivating the second discontinuous communication configuration on the first cell.

The DCI format of the first indication information and the DCI format of the second indication information may be the same as or different from each other.

The related contents of the operation 1940 may be referred to the operation 1820, the operation 440, and the operation1640, which will not be described again here.

It should be noted that the operation 1920 is an optional operation. The execution order of the operation 1920 and the operation 1940 may be adjusted according to the actual situation. For example, the operation 1940 is performed before the operation 1920.

In summary, the method provided by the embodiments of the present disclosure provides a feasible solution for the coexistence and use of different discontinuous communication configurations. If the first DCI format is multiplexed by the first indication information and the second indication information, that is, there is no need to design the DCI format separately for the first indication information and the second indication information, it is advantageous to reduce signaling overhead and improve instruction efficiency. If different DCI formats are used by the first indication information and the second indication information, it is advantageous to improve the flexibility and accuracy of the indication.

FIG. 20 illustrates a block diagram of a structure of an apparatus for indicating discontinuous communication configuration provided by an exemplary embodiment of the present disclosure. The apparatus may be implemented as a terminal device as shown in one or more of FIG. 1, FIG. 2, FIG. 3, FIG. 4, FIG. 16, and FIG. 17, or as a part of a terminal device as shown in one or more of FIG. 1, FIG. 2, FIG. 3, FIG. 4, FIG. 16, and FIG. 17. The apparatus includes a receiving module 2010. Alternatively, the apparatus further includes a sending module 2030 and/or a processing module 2050.

The receiving module 2010 is configured to receive the first indication information and/or the second indication information. The first indication information is used for indicating activating or deactivating the first discontinuous communication configuration on the first cell, and the second indication information is used for indicating activating or deactivating the second discontinuous communication configuration on the first cell.

In some embodiments, the first discontinuous communication configuration includes: the first cell DTX configuration, and/or the first cell DRX configuration. The second discontinuous communication configuration includes: the second cell DTX configuration, and/or the second cell DRX configuration.

In some embodiments, the first indication information includes 1 bit, and the first indication information being used for indicating activating or deactivating the first discontinuous communication configuration on the first cell includes any one of following: in a case that the first discontinuous communication configuration includes the first cell DTX configuration, the 1 bit is used for indicating activating or deactivating the first cell DTX configuration; in a case that the first discontinuous communication configuration includes the first cell DRX configuration, the 1 bit is used for indicating activating or deactivating the first cell DRX configuration; or in a case that the first discontinuous communication configuration includes the first cell DTX configuration and the first cell DRX configuration, the 1 bit is used for indicating activating or deactivating the first cell DTX configuration and the first cell DRX configuration.

In some embodiments, the first indication information includes 2 bits, and in a case that the first discontinuous communication configuration includes the first cell DTX configuration and the first cell DRX configuration, one bit of the 2 bits is used for indicating activating or deactivating the first cell DTX configuration, and the other bit of the 2 bits is used for indicating activating or deactivating the first cell DRX configuration.

In some embodiments, the second indication information includes 1 bit, and the second indication information being used for indicating activating or deactivating the second discontinuous communication configuration on the first cell includes any one of following: in a case that the second discontinuous communication configuration includes the second cell DTX configuration, the 1 bit is used for indicating activating or deactivating the second cell DTX configuration; in a case that the second discontinuous communication configuration includes the second cell DRX configuration, the 1 bit is used for indicating activating or deactivating the second cell DRX configuration; or in a case that the second discontinuous communication configuration includes the second cell DTX configuration and the second cell DRX configuration, the 1 bit is used for indicating activating or deactivating the second cell DTX configuration and the second cell DRX configuration.

In some embodiments, the second indication information includes 2 bits, and in a case that the second discontinuous communication configuration includes the second cell DTX configuration and the second cell DRX configuration, one bit of the 2 bits is used for indicating activating or deactivating the second cell DTX configuration, and the other bit of the 2 bits is used for indicating activating or deactivating the second cell DRX configuration.

In some embodiments, in a case that the first cell is configured with the first discontinuous communication configuration and the first discontinuous communication configuration includes the first cell DTX configuration, during a non-active time of the first cell DTX configuration, the apparatus does not expect to receive at least one of following: the first downlink channel or signal, or the second downlink channel or signal.

In some embodiments, in a case that the first cell is configured with the second discontinuous communication configuration and the second discontinuous communication configuration includes the second cell DTX configuration, during a non-active time of the second cell DTX configuration, the apparatus does not expect to receive the second downlink channel or signal.

In some embodiments, the first downlink channel or signal includes at least one of following: a SSB, a system message, or a paging message.

In some embodiments, the second downlink channel or signal includes at least one of following: a PDCCH scrambled by a RNTI dedicated to the apparatus, a SPS-PDSCH, a PDCCH associated with DCI format 2_0, a PDCCH associated with DCI format 2_1, a PDCCH associated with DCI format 2_2, a PDCCH associated with DCI format 2_3, a PDCCH associated with DCI format 2_4, a PDCCH associated with DCI format 2_5, the first CSI-RS that is transmitted periodically, or the first CSI-RS that is transmitted semi-persistently**.** The first CSI-RS is associated with CSI reporting.

In some embodiments, in a case that the first cell is configured with the first discontinuous communication configuration and the first discontinuous communication configuration includes the first cell DRX configuration, during a non-active time of the first cell DRX configuration, the apparatus does not expect to send at least one of following: the first uplink channel or signal, or the second uplink channel or signal.

In some embodiments, in a case that the first cell is configured with the second discontinuous communication configuration and the second discontinuous communication configuration includes the second cell DRX configuration, during a non-active time of the second cell DRX configuration, the apparatus does not expect to send the second uplink channel or signal.

In some embodiments, the first uplink channel or signal includes at least one of following: a PRACH, a Msg A, or a Msg 3 PUSCH.

In some embodiments, the second uplink channel or signal includes at least one of following: a CG-PUSCH, a SR, CSI that is reported periodically, CSI that is reported semi-persistently, an uplink SRS that is transmitted periodically, or a SRS that is transmitted semi-persistently.

In some embodiments, the first indication information is carried in the first DCI format, and/or the second indication information is carried in the first DCI format.

In some embodiments, the first DCI format includes N bit blocks, the first bit block of the N bit blocks is associated with the first cell, and the first bit block includes the first bit set and/or the second bit set. The first bit set corresponds to the first indication information, and the second bit set corresponds to the second indication information.

In some embodiments, a bit position of a starting bit of the first bit block in the first DCI format is configured by a network device through a higher layer parameter.

In some embodiments, the first DCI format includes N bit blocks, the first bit block and/or the second bit block of the N bit blocks are associated with the first cell, the first bit block includes the first bit set, and the second bit block includes the second bit set. The first bit set corresponds to the first indication information, and the second bit set corresponds to the second indication information.

In some embodiments, a bit position of a starting bit of the first bit block in the first DCI format is configured by a network device through a higher layer parameter; and/or a bit position of a starting bit of the second bit block in the first DCI format is configured by a network device through a higher layer parameter.

In some embodiments, the N bit blocks include the first bit set and the second bit set, and an arrangement order of the first bit set and the second bit set from a most significant bit to a least significant bit is: the first bit set, the second bit set; or the second bit set, the first bit set.

In some embodiments, the N bit blocks further include the third bit set, the third bit set corresponds to third indication information, the third indication information is used for indicating whether the first cell enters the NES mode, and an arrangement order of the first bit set, the second bit set, and the third bit set from a most significant bit to a least significant bit is: the first bit set, the second bit set, and the third bit set; or the second bit set, the first bit set, and the third bit set; or the second bit set, the third bit set, the first bit set.

In some embodiments, the N bit blocks include the first bit set and the third bit set, the third bit set corresponds to the third indication information, the third indication information is used for indicating whether the first cell enters the NES mode, and an arrangement order of the first bit set and the third bit set from a most significant bit to a least significant bit is: the first bit set, the third bit set; or the third bit set, the first bit set.

In some embodiments, the N bit blocks include the second bit set. In a case that the first discontinuous communication configuration includes the first cell DTX configuration and the second discontinuous communication configuration includes the second cell DTX configuration, the first bit in the second bit set is adjusted to indicate activating or deactivating the first cell DTX configuration; and/or in a case that the first discontinuous communication configuration includes the first cell DRX configuration and the second discontinuous communication configuration includes the second cell DRX configuration, the second bit in the second bit set is adjusted to indicate activating or deactivating the first cell DRX configuration. The first bit is a bit used for indicating activating or deactivating the second cell DTX configuration, and the second bit is a bit used for indicating activating or deactivating the second cell DRX configuration.

In some embodiments, in a case that the first discontinuous communication configuration includes the first cell DTX configuration and the second discontinuous communication configuration includes the second cell DTX configuration, the first bit block includes the first bit set, the first bit set includes a bit used for indicating activating or deactivating the first cell DTX configuration, and the second bit set does not include a bit used for indicating activating or deactivating the second cell DTX configuration; and/or in a case that the first discontinuous communication configuration includes the first cell DRX configuration and the second discontinuous communication configuration includes the second cell DRX configuration, the first bit block includes the first bit set, the first bit set includes a bit used for indicating activating or deactivating the first cell DRX configuration, and the second bit set does not include a bit used for indicating activating or deactivating the second cell DRX configuration.

In some embodiments, in a case that the first discontinuous communication configuration includes the first cell DTX configuration and the second discontinuous communication configuration includes the second cell DTX configuration, a bit in the second bit set used for indicating activating or deactivating the second cell DTX configuration is an invalid bit; and/or in a case that the first discontinuous communication configuration includes the first cell DRX configuration and the second discontinuous communication configuration includes the second cell DRX configuration, a bit in the second bit set used for indicating activating or deactivating the second cell DRX configuration is an invalid bit.

In some embodiments, the first cell is configured with the first discontinuous communication configuration, and the first DCI format carries the first indication information; and/or the first cell is configured with the second discontinuous communication configuration, and the first DCI format carries the second indication information.

In some embodiments, the device is in an RRC connected state.

In some embodiments, the first indication information is carried in the second DCI format, and/or the second indication information is carried in the first DCI format. The first DCI format is different from the second DCI format.

In some embodiments, a RNTI corresponding to the second DCI format is configured by a network device through a higher layer parameter; and/or a common search space corresponding to the second DCI format is configured by the network device through a higher layer parameter.

In some embodiments, the apparatus is in an RRC connected state, or an RRC idle state, or an RRC non-active state.

In some embodiments, the first DCI format includes a DCI format 2_9.

In some embodiments, the receiving module 2010 is further configured to receive the first configuration information and/or the second configuration information. The first configuration information is used for configuring the first discontinuous communication configuration on the first cell, and the second configuration information is used for configuring the second discontinuous communication configuration on the first cell.

In some embodiments, the first configuration information is further configured to configure at least one of following: whether the first DCI format carries the first indication information, whether the second DCI format carries the first indication information, or whether the first DCI format carries the second indication information.

In some embodiments, in a case that the first cell is configured with the first discontinuous communication configuration and the second discontinuous communication configuration, the apparatus ignores the second discontinuous communication configuration.

In some embodiments, the receiving module 2010 is configured to perform one or more of the following operations: operation 320, operation 420, operation 440, operation 1620, or operation 1640.

In some embodiments, the receiving module 2010 is further configured to receive signals and/or data according to the first discontinuous communication configuration. In some embodiments, the receiving module 2010 is further configured to receive signals and/or data according to the second discontinuous communication configuration.

In some embodiments, the apparatus further includes a sending module 2030. The sending module 2030 is configured to send signals and/or data. Exemplarily, the sending module 2030 is configured to send signals and/or data to a network device according to the first discontinuous communication configuration. Exemplarily, the sending module 2030 is configured to send signals and/or data to the network device according to the second discontinuous communication configuration.

In some embodiments, the apparatus further includes a processing module 2050. The processing module 2050 is configured to perform one or more of: determining whether the first discontinuous communication configuration is activated or deactivated according to the first indication information; determining whether the second discontinuous communication configuration is activated or deactivated according to the second indication information; or determining whether the first cell enters the NES mode according to the third indication information.

In some embodiments, the processing module 2050 is configured to perform one or more of following: activating the first discontinuous communication configuration, deactivating the first discontinuous communication configuration, activating the second discontinuous communication configuration, deactivating the second discontinuous communication configuration, entering an NES mode, or deactivating an NES mode.

In summary, the apparatus provided by the embodiment of the present disclosure supports activating or deactivating the discontinuous communication configurations on the first cell through the first indication information and the second indication information, and provides a feasible solution for the coexistence and use of different discontinuous communication configurations. It not only supports designing PDCCH formats for the first indication information and the second indication information separately to improve accuracy and flexibility of indication, but also supports multiplexing the first DCI format to reduce signaling overhead and improve indication efficiency.

FIG. 21 illustrates a block diagram of a structure of an apparatus for indicating discontinuous communication configuration provided by an exemplary embodiment of the present disclosure. The apparatus may be implemented as a network device as illustrated in one or more of FIG. 1, FIG. 2, FIG. 18, and FIG. 19, or as a part of a network device as illustrated in one or more of FIG. 1, FIG. 2, FIG. 18, and FIG. 19. The apparatus includes a sending module 2110. Alternatively, the apparatus further includes a receiving module 2130 and/or a processing module 2150.

The sending module 2110 is configured to send the first indication information and/or the second indication information. The first indication information is used for indicating activating or deactivating the first discontinuous communication configuration on the first cell, and the second indication information is used for indicating activating or deactivating the second discontinuous communication configuration on the first cell.

In some embodiments, the first discontinuous communication configuration includes: the first cell DTX configuration, and/or the first cell DRX configuration, and the second discontinuous communication configuration includes: the second cell DTX configuration, and/or the second cell DRX configuration.

In some embodiments, the first indication information includes 1 bit, and the first indication information being used for indicating activating or deactivating the first discontinuous communication configuration on the first cell includes any one of following: in a case that the first discontinuous communication configuration includes the first cell DTX configuration, the 1 bit is used for indicating activating or deactivating the first cell DTX configuration; in a case that the first discontinuous communication configuration includes the first cell DRX configuration, the 1 bit is used for indicating activating or deactivating the first cell DRX configuration; or in a case that the first discontinuous communication configuration includes the first cell DTX configuration and the first cell DRX configuration, the 1 bit is used for indicating activating or deactivating the first cell DTX configuration and the first cell DRX configuration.

In some embodiments, the first indication information includes 2 bits. In a case that the first discontinuous communication configuration includes the first cell DTX configuration and the first cell DRX configuration, one bit of the 2 bits is used for indicating activating or deactivating the first cell DTX configuration, and the other bit of the 2 bits is used for indicating activating or deactivating the first cell DRX configuration.

In some embodiments, the second indication information includes 1 bit, and the second indication information being used for indicating activating or deactivating the second discontinuous communication configuration on the first cell includes any one of following: in a case that the second discontinuous communication configuration includes the second cell DTX configuration, the 1 bit is used for indicating activating or deactivating the second cell DTX configuration; in a case that the second discontinuous communication configuration includes the second cell DRX configuration, the 1 bit is used for indicating activating or deactivating the second cell DRX configuration; or in a case that the second discontinuous communication configuration includes the second cell DTX configuration and the second cell DRX configuration, the 1 bit is used for indicating activating or deactivating the second cell DTX configuration and the second cell DRX configuration.

In some embodiments, the second indication information includes 2 bits. In a case that the second discontinuous communication configuration includes the second cell DTX configuration and the second cell DRX configuration, one bit of the 2 bits is used for indicating activating or deactivating the second cell DTX configuration, and the other bit of the 2 bits is used for indicating activating or deactivating the second cell DRX configuration.

In some embodiments, in a case that the first cell is configured with the first discontinuous communication configuration, and the first discontinuous communication configuration includes the first cell DTX configuration, during a non-active time of the first cell DTX configuration, the terminal device does not expect to receive at least one of following: the first downlink channel or signal, or the second downlink channel or signal.

In some embodiments, in a case that the first cell is configured with the second discontinuous communication configuration, and the second discontinuous communication configuration includes the second cell DTX configuration, during a non-active time of the second cell DTX configuration, the terminal device does not expect to receive the second downlink channel or signal.

In some embodiments, the first downlink channel or signal includes at least one of following: an SSB, a system message, or a paging message.

In some embodiments, the second downlink channel or signal includes at least one of following: a PDCCH scrambled by a RNTI dedicated to the terminal device, a SPS-PDSCH, a PDCCH associated with DCI format 2_0, a PDCCH associated with DCI format 2_1, a PDCCH associated with DCI format 2_2, a PDCCH associated with DCI format 2_3, a PDCCH associated with DCI format 2_4, a PDCCH associated with DCI format 2_5, the first CSI-RS that is transmitted periodically, or the first CSI-RS that is transmitted semi-persistently**.** The first CSI-RS is associated with CSI reporting.

In some embodiments, in a case that the first cell is configured with the first discontinuous communication configuration and the first discontinuous communication configuration includes the first cell DRX configuration, the terminal device does not expect to send at least one of following: the first uplink channel or signal, or the second uplink channel or signal during a non-active time of the first cell DRX configuration.

In some embodiments, in a case that the first cell is configured with the second discontinuous communication configuration, and the second discontinuous communication configuration includes the second cell DRX configuration, the terminal device does not expect to send the second uplink channel or signal during a non-active time of the second cell DRX configuration.

In some embodiments, the first uplink channel or signal includes at least one of following: a PRACH, a Msg A, or a Msg 3 PUSCH.

In some embodiments, the second uplink channel or signal includes at least one of following: a CG-PUSCH, a SR, CSI that is reported periodically, CSI that is reported semi-persistently, an uplink SRS that is transmitted periodically, or a SRS that is transmitted semi-persistently.

In some embodiments, the first indication information is carried in the first DCI format, and/or the second indication information is carried in the first DCI format.

In some embodiments, the first DCI format includes N bit blocks, the first bit block of the N bit blocks is associated with the first cell, the first bit block includes the first bit set and/or the second bit set, the first bit set corresponds to the first indication information, and the second bit set corresponds to the second indication information.

In some embodiments, a bit position of a starting bit of the first bit block in the first DCI format is configured by the apparatus by a higher layer parameter.

In some embodiments, the first DCI format includes N bit blocks, the first bit block or the second bit block of the N bit blocks is associated with the first cell, the first bit block includes the first bit set, the second bit block includes the second bit set, the first bit set corresponds to the first indication information, and the second bit set corresponds to the second indication information.

In some embodiments, a bit position of a starting bit of the first bit block in the first DCI format is configured by the apparatus through a higher layer parameter; and/or a bit position of a starting bit of the second bit block in the first DCI format is configured by the apparatus by a higher layer parameter.

In some embodiments, the N bit blocks include the first bit set and the second bit set, and an arrangement order of the first bit set and the second bit set from a most significant bit to a least significant bit is: the first bit set, the second bit set; or the second bit set, the first bit set.

In some embodiments, the N bit blocks further includes the third bit set, the third bit set corresponds to the third indication information, the third indication information is used for indicating whether the first cell enters a network energy savings (NES) mode, and an arrangement order of the first bit set, the second bit set, and the third bit set from a most significant bit to a least significant bit is: the first bit set, the second bit set, the third bit set; or the second bit set, the first bit set, the third bit set; or the second bit set, the third bit set, the first bit set.

In some embodiments, the N bit blocks includes the first bit set and the third bit set, the third bit set corresponds to the third indication information, the third indication information is used for indicating whether the first cell enters a NES mode, and an arrangement order of the first bit set and the third bit set from a most significant bit to a least significant bit is: the first bit set, the third bit set; or the third bit set, the first bit set.

In some embodiments, the N bit blocks include the second bit set. In a case that the first discontinuous communication configuration includes the first cell DTX configuration and the second discontinuous communication configuration includes the second cell DTX configuration, the first bit in the second bit set is adjusted to indicate activating or deactivating the first cell DTX configuration; and/or in a case that the first discontinuous communication configuration includes the first cell DRX configuration and the second discontinuous communication configuration includes the second cell DRX configuration, the second bit in the second bit set is adjusted to indicate activating or deactivating the first cell DRX configuration. The first bit is a bit used for indicating activating or deactivating the second cell DTX configuration, and the second bit is a bit used for indicating activating or deactivating the second cell DRX configuration.

In some embodiments, in a case that the first discontinuous communication configuration includes the first cell DTX configuration and the second discontinuous communication configuration includes the second cell DTX configuration, the first bit block includes the first bit set, the first bit set includes a bit used for indicating activating or deactivating the first cell DTX configuration, and the second bit set does not include a bit used for indicating activating or deactivating the second cell DTX configuration; and/or in a case that the first discontinuous communication configuration includes the first cell DRX configuration and the second discontinuous communication configuration includes the second cell DRX configuration, the first bit block includes the first bit set, the first bit set includes a bit used for indicating activating or deactivating the first cell DRX configuration, and the second bit set does not include a bit used for indicating activating or deactivating the second cell DRX configuration.

In some embodiments, in a case that the first discontinuous communication configuration includes the first cell DTX configuration and the second discontinuous communication configuration includes the second cell DTX configuration, a bit in the second bit set used for indicating activating or deactivating the second cell DTX configuration is an invalid bit; and/or in a case that the first discontinuous communication configuration include the first cell DRX configuration and the second discontinuous communication configuration includes the second cell DRX configuration, a bit in the second bit set used for indicating activating or deactivating the second cell DRX configuration is an invalid bit .

In some embodiments, the first cell is configured with the first discontinuous communication configuration, and the first DCI format carries the first indication information; and/or the first cell is configured with the second discontinuous communication configuration, and the first DCI format carries the second indication information.

In some embodiments, the terminal device is in an RRC connected state.

In some embodiments, the first indication information is carried in the second DCI format, and/or the second indication information is carried in the first DCI format. The first DCI format is different from the second DCI format.

In some embodiments, a RNTI corresponding to the second DCI format is configured by the apparatus through a higher layer parameter; and/or a common search space corresponding to the second DCI format is configured by the apparatus through a higher layer parameter.

In some embodiments, the terminal device is in an RRC connected state, or an RRC idle state, or an RRC non-active state.

In some embodiments, the first DCI format includes a DCI format 2_9.

In some embodiments, the sending module 2110 is further configured to send the first configuration information and/or second configuration information. The first configuration information is used for configuring the first discontinuous communication configuration on the first cell, and the second configuration information is used for configuring the second discontinuous communication configuration on the first cell.

In some embodiments, the first configuration information is further configured to configure at least one of following: whether the first DCI format carries the first indication information, whether the second DCI format carries the first indication information, or whether the first DCI format carries the second indication information.

In some embodiments, in a case that the first cell is configured with the first discontinuous communication configuration and the second discontinuous communication configuration, the second discontinuous communication configuration is ignored by the terminal device.

In some embodiments, the sending module 2110 is configured to perform one or more of the following operations: the operation 1820, the operation 1920, or the operation 1940.

In some embodiments, the sending module 2110 is further configured to send signals and/or data according to the first discontinuous communication configuration. In some embodiments, the sending module 2110 is further configured to send signals and/or data according to the second discontinuous communication configuration.

In some embodiments, the sending module 2110 is further configured to perform one or more of following: reconfiguring the first discontinuous communication configuration, or reconfiguring the second discontinuous communication configuration.

In some embodiments, the apparatus further includes a receiving module 2130. The receiving module 2130 is configured to receive signals and/or data. Exemplarily, the receiving module 2130 is configured to receive signals and/or data according to the first discontinuous communication configuration. Exemplarily, the receiving module 2130 is configured to receive signals and/or data according to the second discontinuous communication configuration.

In some embodiments, the apparatus further includes a processing module 2150. The processing module 2150 is configured to perform one or more of following: determining whether the first discontinuous communication configuration is activated or deactivated; determining whether the second discontinuous communication configuration is activated or deactivated; or determining whether the first cell enters NES mode.

In summary, the apparatus provided by the embodiment of the present disclosure supports activating or deactivating the discontinuous communication configurations on the first cell through the first indication information and the second indication information, and provides a feasible solution for the coexistence and use of different discontinuous communication configurations. It not only supports designing PDCCH formats for the first indication information and the second indication information separately to improve accuracy and flexibility of indication, but also supports multiplexing the first DCI format to reduce signaling overhead and improve indication efficiency.

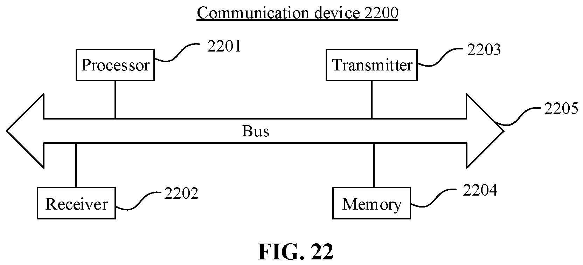

FIG. 22 is a schematic diagram of a structure of a communication device provided by an exemplary embodiment of the present disclosure. The communication device includes at least one of following: a processor 2201, a receiver 2202, a transmitter 2203, a memory 2204, and a bus 2205.

In some embodiments, the communication device 2200 may be implemented as a terminal device as illustrated in one or more of FIG. 1, FIG. 2, FIG. 3, FIG. 4, and FIG. 6. The communication device 2200 may be configured to perform at least some of the operations performed by the terminal device as illustrated in FIG. 1, FIG. 2, FIG. 3, FIG. 4, and FIG. 6.

In some embodiments, the communication device 2200 may be implemented as a network device as illustrated in one or more of FIG. 1, FIG. 2, FIG. 18, and FIG. 19. The communication device 2200 may be configured to perform at least some of the operations performed by a network device as illustrated in FIG. 1, FIG. 2, FIG. 18, and FIG. 19.

In some embodiments, the processor 2201 includes one or more processing cores, and the processor 2201 executes various functional applications and information processing by running software programs and modules. In some embodiments, the processor 2201 may be used to implement the functions and operations of the processing module 2050 and/or the processing module 2150 described above.

In some embodiments, the receiver 2202 and the transmitter 2203 may be implemented as a communication component, which may be a communication chip, which may be referred to as a transceiver. In some embodiments, the receiver 2202 may be used to implement the functions and operations of the receiving module 2010 and/or the receiving module 2130 described above, and the transmitter 2203 may be used to implement the functions and operations of the sending module 2030 and/or the sending module 2110 described above.

The memory 2204 is connected to the processor 2201 via a bus 2205.

The memory 2204 may be configured to store at least one instruction, and the processor 2201 may be configured to execute the at least one instruction to implement various steps in the method embodiments described above.

Further, the memory 2204 may be implemented by any type of volatile or nonvolatile storage device, including, but not limited to, magnetic or optical disks, Electrically-Erasable Programmable Read Only Memory (EEPROM), Erasable Programmable Read Only Memory (EPROM), Static Random Access Memory (SRAM), Read-Only Memory (ROM), magnetic memory, flash memory, Programmable Read-Only Memory (PROM).

In some embodiments, the receiver 2202 independently receives the signal/data, or the processor 2201 controls the receiver 2202 to receive the signal/data, or the processor 2201 requests the receiver 2202 to receive the signal/data, or the processor 2201 cooperates with the receiver 2202 to receive the signal/data.

In some embodiments, the transmitter 2203 sends signals/data independently, or the processor 2201 controls the transmitter 2203 to send signals/data, or the processor 2201 requests the transmitter 2203 to send signals/data, or the processor 2201 cooperates with the transmitter 2203 to send signals/data.

In an exemplary embodiment of the present disclosure, there is also provided a computer-readable storage medium in which at least one program is stored, and the at least one program is loaded and executed by the processor to implement a method for indicating discontinuous communication configuration provided by each of the above-described method embodiments.

In an exemplary embodiment of the present disclosure, there is also provided a chip including a programmable logic circuit and/or program instructions for implementing a method for indicating discontinuous communication configuration provided by each of the above-described method embodiments when the chip is run on a communication device.

In some embodiments, the chip includes a receiving module 2010. Alternatively, the chip further includes a sending module 2030 and/or a processing module 2050. The related contents of the receiving module 2010, the sending module 2030, and the processing module 2050 may be described above, and will not be described again here.

In some embodiments, the chip includes a sending module 2110. Alternatively, the chip further includes a receiving module 2130 and/or a processing module 2150. The related contents of the sending module 2110, the receiving module 2130, and/or the processing module 2150 may be described above, and will not be described again here.

In an exemplary embodiment of the present disclosure, there is also provided a computer program product that, when executed on a processor of a computer device, causes the computer device to execute the above-described method for indicating discontinuous communication configuration.

In an exemplary embodiment of the present disclosure, there is also provided a computer program including computer instructions, and a processor of a computer device executes the computer instructions, causing the computer device to execute the above-described method for indicating discontinuous communication configuration.

Those of ordinary skill in the art may understand that all or part of the operations of implementing the above-described embodiments may be completed by hardware, or related hardware may be instructed to complete by a program, and the program may be stored in a computer-readable storage medium, and the above-mentioned storage medium may be a read-only memory, a magnetic disk, an optical disk, or the like.

The foregoing is merely specific embodiments of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be subject to the scope of protection of the claims.

## Claims

1. A method for indicating discontinuous communication configuration, the method being performed by a terminal device, and the method comprising:
receiving first indication information and/or second indication information, the first indication information being used for indicating activating or deactivating a first discontinuous communication configuration on a first cell, and the second indication information being used for indicating activating or deactivating a second discontinuous communication configuration on the first cell.

2. The method of claim 1, wherein the first discontinuous communication configuration comprises: a first cell Discontinuous Transmission (DTX) configuration, and/or a first cell Discontinuous Reception (DRX) configuration, and the second discontinuous communication configuration comprises: a second cell DTX configuration, and/or a second cell DRX configuration.

3. The method of claim 2, wherein the first indication information comprises 1 bit, and the first indication information being used for indicating activating or deactivating the first discontinuous communication configuration on the first cell comprises any one of following:
in a case that the first discontinuous communication configuration comprises the first cell DTX configuration, the 1 bit is used for indicating activating or deactivating the first cell DTX configuration;
in a case that the first discontinuous communication configuration comprises the first cell DRX configuration, the 1 bit is used for indicating activating or deactivating the first cell DRX configuration; or
in a case that the first discontinuous communication configuration comprises the first cell DTX configuration and the first cell DRX configuration, the 1 bit is used for indicating activating or deactivating the first cell DTX configuration and the first cell DRX configuration.

4. The method of claim 2, wherein the first indication information comprises 2 bits, and in a case that the first discontinuous communication configuration comprises the first cell DTX configuration and the first cell DRX configuration, one bit of the 2 bits is used for indicating activating or deactivating the first cell DTX configuration, and the other bit of the 2 bits is used for indicating activating or deactivating the first cell DRX configuration.

5. The method of claim 2, wherein the second indication information comprises 1 bit, and the second indication information being used for indicating activating or deactivating the second discontinuous communication configuration on the first cell comprises any one of following:
in a case that the second discontinuous communication configuration comprises the second cell DTX configuration, the 1 bit is used for indicating activating or deactivating the second cell DTX configuration;
in a case that the second discontinuous communication configuration comprises the second cell DRX configuration, the 1 bit is used for indicating activating or deactivating the second cell DRX configuration; or
in a case that the second discontinuous communication configuration comprises the second cell DTX configuration and the second cell DRX configuration, the 1 bit is used for indicating activating or deactivating the second cell DTX configuration and the second cell DRX configuration.

6. The method of claim 2, wherein the second indication information comprises 2 bits, and in a case that the second discontinuous communication configuration comprises the second cell DTX configuration and the second cell DRX configuration, one bit of the 2 bits is used for indicating activating or deactivating the second cell DTX configuration, and the other bit of the 2 bits is used for indicating activating or deactivating the second cell DRX configuration.

7. The method of any one of claims 2 to 6, wherein in a case that the first cell is configured with the first discontinuous communication configuration and the first discontinuous communication configuration comprises the first cell DTX configuration, during a non-active time of the first cell DTX configuration, the terminal device does not expect to receive at least one of following: a first downlink channel or signal, or a second downlink channel or signal.

8. The method of any one of claims 2 to 6, wherein in a case that the first cell is configured with the second discontinuous communication configuration and the second discontinuous communication configuration comprises the second cell DTX configuration, during a non-active time of the second cell DTX configuration, the terminal device does not expect to receive a second downlink channel or signal.

9. The method of claim 7, wherein the first downlink channel or signal comprises at least one of following: a synchronization signal and PBCH block (SSB), a system message, or a paging message.

10. The method of claim 7 or 8, wherein the second downlink channel or signal comprises at least one of following: a Physical Downlink Control Channel (PDCCH) scrambled by a Radio Network Temporary Identifier (RNTI) dedicated to the terminal device, a Semi-Persistent Scheduling-Physical DownLink Shared Channel (SPS-PDSCH), a PDCCH associated with DCI format 2_0, a PDCCH associated with DCI format 2_1, a PDCCH associated with DCI format 2_2, a PDCCH associated with DCI format 2_3, a PDCCH associated with DCI format 2_4, a PDCCH associated with DCI format 2_5, a first Channel State Information-Reference Signal (CSI-RS) that is transmitted periodically, or a first CSI-RS that is transmitted semi-persistently, wherein the first CSI-RS is associated with CSI reporting.

11. The method of any one of claims 2 to 6, wherein in a case that the first cell is configured with the first discontinuous communication configuration and the first discontinuous communication configuration comprises the first cell DRX configuration, during a non-active time of the first cell DRX configuration, the terminal device does not expect to send at least one of following: a first uplink channel or signal, or a second uplink channel or signal.

12. The method of any one of claims 2 to 6, wherein in a case that the first cell is configured with the second discontinuous communication configuration and the second discontinuous communication configuration comprises the second cell DRX configuration, during a non-active time of the second cell DRX configuration, the terminal device does not expect to send a second uplink channel or signal.

13. The method of claim 11, wherein the first uplink channel or signal comprises at least one of following: a Physical Random Access Channel (PRACH), a Msg A, or a Msg 3 Physical Uplink Shared Channel (PUSCH).

14. The method of claim 11 or 12, wherein the second uplink channel or signal comprises at least one of following: a Configured Grant-PUSCH (CG-PUSCH), a Scheduling Request (SR), CSI that is reported periodically, CSI that is reported semi-persistently, an uplink Sounding Reference Signal (SRS) that is transmitted periodically, or a SRS that is transmitted semi-persistently.

15. The method of any one of claims 1 to 14, wherein the first indication information is carried in a first Downlink Control Information (DCI) format, and/or the second indication information is carried in the first DCI format.

16. The method of claim 15, wherein the first DCI format comprises N bit blocks, a first bit block of the N bit blocks is associated with the first cell, the first bit block comprises a first bit set and/or a second bit set, the first bit set corresponds to the first indication information, and the second bit set corresponds to the second indication information.

17. The method of claim 16, wherein a bit position of a starting bit of the first bit block in the first DCI format is configured by a network device through a higher layer parameter.

18. The method of claim 15, wherein the first DCI format comprises N bit blocks, a first bit block of the N bit blocks is associated with the first cell block, and/or a second bit block of the N bit blocks is associated with the first cell block, the first bit block comprises a first bit set, the second bit block comprises a second bit set, the first bit set corresponds to the first indication information, and the second bit set corresponds to the second indication information.

19. The method of claim 18, wherein a bit position of a starting bit of the first bit block in the first DCI format is configured by a network device through a higher layer parameter; and/or a bit position of a starting bit of the second bit block in the first DCI format is configured by the network device through a higher layer parameter.

20. The method of any one of claims 16 to 19, wherein the N bit blocks comprise the first bit set and the second bit set, and an arrangement order of the first bit set and the second bit set from a most significant bit to a least significant bit is: the first bit set, the second bit set; or the second bit set, the first bit set.

21. The method of claim 20, wherein the N bit blocks further comprise a third bit set, the third bit set corresponds to third indication information, the third indication information is used for indicating whether the first cell enters a network energy savings (NES) mode, and an arrangement order of the first bit set, the second bit set, and the third bit set from a most significant bit to a least significant bit is: the first bit set, the second bit set, and the third bit set; or the second bit set, the first bit set, and the third bit set; or the second bit set, the third bit set, the first bit set.

22. The method of any one of claims 16 to 19, wherein the N bit blocks comprise the first bit set and a third bit set, the third bit set corresponds to third indication information, the third indication information is used for indicating whether the first cell enters a NES mode, and an arrangement order of the first bit set and the third bit set from a most significant bit to a least significant bit is: the first bit set, the third bit set; or the third bit set, the first bit set.

23. The method of any one of claims 16 to 19, wherein the N bit blocks comprise the second bit set, and
in a case that the first discontinuous communication configuration comprises a first cell DTX configuration and the second discontinuous communication configuration comprises a second cell DTX configuration, a first bit in the second bit set is adjusted to indicate activating or deactivating the first cell DTX configuration; and/or
in a case that the first discontinuous communication configuration comprises a first cell DRX configuration and the second discontinuous communication configuration comprises a second cell DRX configuration, a second bit in the second bit set is adjusted to indicate activating or deactivating the first cell DRX configuration,
wherein the first bit is a bit used for indicating activating or deactivating the second cell DTX configuration, and the second bit is a bit used for indicating activating or deactivating the second cell DRX configuration.

24. The method of any one of claims 16 to 19, wherein
in a case that the first discontinuous communication configuration comprises a first cell DTX configuration and the second discontinuous communication configuration comprises a second cell DTX configuration, the first bit block comprises the first bit set, the first bit set comprises a bit used for indicating activating or deactivating the first cell DTX configuration, and the second bit set does not comprise a bit used for indicating activating or deactivating the second cell DTX configuration; and/or
in a case that the first discontinuous communication configuration comprises a first cell DRX configuration and the second discontinuous communication configuration comprises a second cell DRX configuration, the first bit block comprises the first bit set, the first bit set comprises a bit used for indicating activating or deactivating the first cell DRX configuration, and the second bit set does not comprise a bit used for indicating activating or deactivating the second cell DRX configuration.

25. The method of any one of claims 16 to 19, wherein
in a case that the first discontinuous communication configuration comprises a first cell DTX configuration and the second discontinuous communication configuration comprises a second cell DTX configuration, a bit in the second bit set used for indicating activating or deactivating the second cell DTX configuration is an invalid bit; and/or
in a case that the first discontinuous communication configuration comprises a first cell DRX configuration and the second discontinuous communication configuration comprises a second cell DRX configuration, a bit in the second bit set used for indicating activating or deactivating the second cell DRX configuration is an invalid bit.

26. The method of any one of claims 15 to 25, wherein the first cell is configured with the first discontinuous communication configuration, and the first DCI format carries the first indication information; and/or the first cell is configured with the second discontinuous communication configuration, and the first DCI format carries the second indication information.

27. The method of any one of claims 15 to 26, wherein the terminal device is in a Radio Resource Control (RRC) connected state.

28. The method of any one of claims 1 to 14, wherein the first indication information is carried in a second DCI format, and/or the second indication information is carried in a first DCI format, and the first DCI format is different from the second DCI format.

29. The method of claim 28, wherein a RNTI corresponding to the second DCI format is configured by a network device through a higher layer parameter; and/or a common search space corresponding to the second DCI format is configured by the network device through a higher layer parameter.

30. The method of claim 28 or 29, wherein the terminal device is in a RRC connected state, or an RRC idle state, or an RRC non-active state.

31. The method of any one of claims 15 to 30, wherein the first DCI format comprises a DCI format 2_9.

32. The method of any one of claims 1 to 31, further comprising:
receiving first configuration information and/or second configuration information, wherein the first configuration information is used for configuring a first discontinuous communication configuration on the first cell, and the second configuration information is used for configuring a second discontinuous communication configuration on the first cell.

33. The method of claim 32, wherein the first configuration information is further configured to configure at least one of following: whether a first DCI format carries the first indication information, whether a second DCI format carries the first indication information, or whether the first DCI format carries the second indication information.

34. The method of any one of claims 1 to 33, wherein in a case that the first cell is configured with the first discontinuous communication configuration and the second discontinuous communication configuration, the terminal device ignores the second discontinuous communication configuration.

35. A method for indicating discontinuous communication configuration, the method being performed by a network device, and the method comprising:
sending first indication information and/or second indication information, wherein the first indication information is used for indicating activating or deactivating a first discontinuous communication configuration on a first cell, and the second indication information is used for indicating activating or deactivating a second discontinuous communication configuration on the first cell.

36. The method of claim 35, wherein the first discontinuous communication configuration comprises: a first cell Discontinuous Transmission (DTX) configuration, and/or a first cell Discontinuous Reception (DRX) configuration, and the second discontinuous communication configuration comprises: a second cell DTX configuration, and/or a second cell DRX configuration.

37. The method of claim 36, wherein the first indication information comprises 1 bit, and the first indication information being used for indicating activating or deactivating the first discontinuous communication configuration on the first cell comprises any one of following:
in a case that the first discontinuous communication configuration comprises the first cell DTX configuration, the 1 bit is used for indicating activating or deactivating the first cell DTX configuration;
in a case that the first discontinuous communication configuration comprises the first cell DRX configuration, the 1 bit is used for indicating activating or deactivating the first cell DRX configuration; or
in a case that the first discontinuous communication configuration comprises the first cell DTX configuration and the first cell DRX configuration, the 1 bit is used for indicating activating or deactivating the first cell DTX configuration and the first cell DRX configuration.

38. The method of claim 36, wherein the first indication information comprises 2 bits, and the first indication information being used for indicating activating or deactivating the first discontinuous communication configuration on the first cell comprises:
in a case that the first discontinuous communication configuration comprises the first cell DTX configuration and the first cell DRX configuration, one bit of the 2 bits is used for indicating activating or deactivating the first cell DTX configuration, and the other bit of the 2 bits is used for indicating activating or deactivating the first cell DRX configuration.

39. The method of claim 36, wherein the second indication information comprises 1 bit, and the second indication information being used for indicating activating or deactivating the second discontinuous communication configuration on the first cell comprises any one of following:
in a case that the second discontinuous communication configuration comprises the second cell DTX configuration, the 1 bit is used for indicating activating or deactivating the second cell DTX configuration;
in a case that the second discontinuous communication configuration comprises the second cell DRX configuration, the 1 bit is used for indicating activating or deactivating the second cell DRX configuration; or
in a case that the second discontinuous communication configuration comprises the second cell DTX configuration and the second cell DRX configuration, the 1 bit is used for indicating activating or deactivating the second cell DTX configuration and the second cell DRX configuration.

40. The method of claim 36, wherein the second indication information comprises 2 bits, and the second indication information being used for indicating activating or deactivating the second discontinuous communication configuration on the first cell comprises:
in a case that the second discontinuous communication configuration comprises the second cell DTX configuration and the second cell DRX configuration, one bit of the 2 bits is used for indicating activating or deactivating the second cell DTX configuration, and the other bit of the 2 bits is used for indicating activating or deactivating the second cell DRX configuration.

41. The method of any one of claims 36 to 40, further comprising:
in a case that the first cell is configured with the first discontinuous communication configuration and the first discontinuous communication configuration comprises the first cell DTX configuration, not sending, by the network device, at least one of following: a first downlink channel or signal or a second downlink channel or signal during a non-active time of the first cell DTX configuration.

42. The method of any one of claims 36 to 40, further comprising:
in a case that the first cell is configured with the second discontinuous communication configuration and the second discontinuous communication configuration comprises the second cell DTX configuration, during a non-active time of the second cell DTX configuration, not sending, by the network device, a second downlink channel or signal.

43. The method of claim 41, wherein the first downlink channel or signal comprises at least one of following: a synchronization signal and PBCH block (SSB), a system message, or a paging message.

44. The method of claim 41 or 42, wherein the second downlink channel or signal comprises at least one of following: a Physical Downlink Control Channel (PDCCH) scrambled by a Radio Network Temporary Identifier (RNTI) dedicated to the terminal device, a Semi-Persistent Scheduling-Physical DownLink Shared Channel (SPS-PDSCH), a PDCCH associated with DCI format 2_0, a PDCCH associated with DCI format 2_1, a PDCCH associated with DCI format 2_2, a PDCCH associated with DCI format 2_3, a PDCCH associated with DCI format 2_4, a PDCCH associated with DCI format 2_5, a first Channel State Information-Reference Signal (CSI-RS) that is transmitted periodically, or a first CSI-RS that is transmitted semi-persistently**,** wherein the first CSI-RS is associated with CSI reporting.

45. The method of any one of claims 36 to 40, further comprising:
in a case that the first cell is configured with the first discontinuous communication configuration and the first discontinuous communication configuration comprises the first cell DRX configuration, not receiving, by the network device, at least one of following: a first uplink channel or signal, or a second uplink channel or signal during a non-active time of the first cell DRX configuration.

46. The method of any one of claims 36 to 40, further comprising:
in a case that the first cell is configured with the second discontinuous communication configuration and the second discontinuous communication configuration comprises the second cell DRX configuration, not receiving, by the network device, a second uplink channel or signal during a non-active time of the second cell DRX configuration.

47. The method of claim 45, wherein the first uplink channel or signal comprises at least one of following: a Physical Random Access Channel (PRACH), a Msg A, or a Msg 3 Physical Uplink Shared Channel (PUSCH).

48. The method of claim 45 or 46, wherein the second uplink channel or signal comprises at least one of following: a Configured Grant-PUSCH (CG-PUSCH), a Scheduling Request (SR), CSI that is reported periodically, CSI that is reported semi-persistently, an uplink Sounding Reference Signal (SRS) that is transmitted periodically, or a SRS that is transmitted semi-persistently.

49. The method of any one of claims 35 to 48, wherein the first indication information is carried in a first Downlink Control Information (DCI) format, and/or the second indication information is carried in the first DCI format.

50. The method of claim 49, wherein the first DCI format comprises N bit blocks, a first bit block of the N bit blocks is associated with the first cell, the first bit block comprises a first bit set and/or a second bit set, the first bit set corresponds to the first indication information, and the second bit set corresponds to the second indication information.

51. The method of claim 50, wherein a bit position of a starting bit of the first bit block in the first DCI format is configured by a network device through a higher layer parameter.

52. The method of claim 49, wherein the first DCI format comprises N bit blocks, a first bit block of the N bit blocks is associated with the first cell block, and/or a second bit block of the N bit blocks is associated with the first cell block, the first bit block comprises a first bit set, the second bit block comprises a second bit set, the first bit set corresponds to the first indication information, and the second bit set corresponds to the second indication information.

53. The method of claim 52, wherein a bit position of a starting bit of the first bit block in the first DCI format is configured by a network device through a higher layer parameter; and/or a bit position of a starting bit of the second bit block in the first DCI format is configured by the network device through a higher layer parameter.

54. The method of any one of claims 50 to 53, wherein the N bit blocks comprise the first bit set and the second bit set, and an arrangement order of the first bit set and the second bit set from a most significant bit to a least significant bit is: the first bit set, the second bit set; or the second bit set, the first bit set.

55. The method of claim 54, wherein the N bit blocks further comprise a third bit set, the third bit set corresponds to third indication information, the third indication information is used for indicating whether the first cell enters a network energy savings (NES) mode, and an arrangement order of the first bit set, the second bit set, and the third bit set from a most significant bit to a least significant bit is: the first bit set, the second bit set, the third bit set; or the second bit set, the first bit set, the third bit set; or the second bit set, the third bit set, the first bit set.

56. The method of any one of claims 50 to 53, wherein the N bit blocks comprise the first bit set and a third bit set, the third bit set corresponds to third indication information, the third indication information is used for indicating whether the first cell enters a NES mode, and an arrangement order of the first bit set and the third bit set from a most significant bit to a least significant bit is: the first bit set, the third bit set; or the third bit set, the first bit set.

57. The method of any one of claims 50 to 53, wherein the N bit blocks comprise the second bit set, and
in a case that the first discontinuous communication configuration comprises a first cell DTX configuration and the second discontinuous communication configuration comprises a second cell DTX configuration, a first bit in the second bit set is adjusted to indicate activating or deactivating the first cell DTX configuration; and/or
in a case that the first discontinuous communication configuration comprises a first cell DRX configuration and the second discontinuous communication configuration comprises a second cell DRX configuration, a second bit in the second bit set is adjusted to indicate activating or deactivating the first cell DRX configuration,
wherein the first bit is a bit used for indicating activating or deactivating the second cell DTX configuration, and the second bit is a bit used for indicating activating or deactivating the second cell DRX configuration.

58. The method of any one of claims 50 to 53, wherein
in a case that the first discontinuous communication configuration comprises a first cell DTX configuration and the second discontinuous communication configuration comprises a second cell DTX configuration, the first bit block comprises the first bit set, the first bit set comprises a bit used for indicating activating or deactivating the first cell DTX configuration, and the second bit set does not comprise a bit used for indicating activating or deactivating the second cell DTX configuration; and/or
in a case that the first discontinuous communication configuration comprises a first cell DRX configuration and the second discontinuous communication configuration comprises a second cell DRX configuration, the first bit block comprises the first bit set, the first bit set comprises a bit used for indicating activating or deactivating the first cell DRX configuration, and the second bit set does not comprise a bit used for indicating activating or deactivating the second cell DRX configuration.

59. The method of any one of claims 50 to 53, wherein
in a case that the first discontinuous communication configuration comprises a first cell DTX configuration and the second discontinuous communication configuration comprises a second cell DTX configuration, a bit in the second bit set used for indicating activating or deactivating the second cell DTX configuration is an invalid bit; and/or
in a case that the first discontinuous communication configuration comprises a first cell DRX configuration and the second discontinuous communication configuration comprises a second cell DRX configuration, a bit in the second bit set used for indicating activating or deactivating the second cell DRX configuration is an invalid bit.

60. The method of any one of claims 49 to 59, wherein the first cell is configured with the first discontinuous communication configuration, and the first DCI format carries the first indication information; and/or the first cell is configured with the second discontinuous communication configuration, and the first DCI format carries the second indication information.

61. The method of any one of claims 49 to 60, wherein the terminal device is in a Radio Resource Control (RRC) connected state.

62. The method of any one of claims 35 to 48, wherein the first indication information is carried in a second DCI format, and/or the second indication information is carried in a first DCI format, and the first DCI format is different from the second DCI format.

63. The method of claim 62, wherein a RNTI corresponding to the second DCI format is configured by the network device through a higher layer parameter; and/or a common search space corresponding to the second DCI format is configured by the network device through a higher layer parameter.

64. The method of claim 62 or 63, wherein the terminal device is in a RRC connected state, or an RRC idle state, or an RRC non-active state.

65. The method of any one of claims 49 to 64, wherein the first DCI format comprises a DCI format 2_9.

66. The method of any one of claims 35 to 65, further comprising:
sending first configuration information and/or second configuration information, wherein the first configuration information is used for configuring a first discontinuous communication configuration on the first cell, and the second configuration information is used for configuring a second discontinuous communication configuration on the first cell.

67. The method of claim 66, wherein the first configuration information is further configured to configure at least one of following: whether a first DCI format carries the first indication information, whether a second DCI format carries the first indication information, or whether the first DCI format carries the second indication information.

68. The method of any one of claims 35 to 67, wherein in a case that the first cell is configured with the first discontinuous communication configuration and the second discontinuous communication configuration, the second discontinuous communication configuration is ignored by the terminal device.

69. An apparatus for indicating discontinuous communication configuration, comprising:
a receiving module, configured to receive first indication information and/or second indication information, wherein the first indication information is used for indicating activating or deactivating a first discontinuous communication configuration on a first cell, and the second indication information is used for indicating activating or deactivating a second discontinuous communication configuration on the first cell.

70. An apparatus for indicating discontinuous communication configuration, comprising:
a sending module, configured to send first indication information and/or second indication information, wherein the first indication information is used for indicating activating or deactivating a first discontinuous communication configuration on a first cell, and the second indication information is used for indicating activating or deactivating a second discontinuous communication configuration on the first cell.

71. A communication device comprising: a processor, a receiver and/or transmitter connected to the processor, and a memory for storing instructions executable for the processor, wherein the communication device is configured to implement the method for indicating discontinuous communication configuration of any one of claims 1 to 34, or any one of claims 35 to 68.

72. A computer-readable storage medium, wherein the readable storage medium stores executable instructions, and the executable instructions are loaded and executed by a processor to implement the method for indicating discontinuous communication configuration of any one of claims 1 to 34, or any one of claims 35 to 68.

73. A chip comprising a programmable logic circuit or program for implementing the method for indicating discontinuous communication configuration of any one of claims 1 to 34, or any one of claims 35 to 68.

74. A computer program product comprising computer instructions stored in a computer-readable storage medium, a processor of a computer device reading the computer instructions from the computer-readable storage medium, and the processor executing the computer instructions to cause the computer device to perform the method for indicating discontinuous communication configuration of any one of claims 1 to 34, or any one of claims 35 to 68.

75. A computer program comprising computer instructions executed by a processor of a computer device to cause the computer device to perform the method for indicating discontinuous communication configuration of any one of claims 1 to 34, or any one of claims 35 to 68.
